# EUROPEAN PATENT APPLICATION

(11) **EP 4 562 993 A1**
(43) Date of publication of application: **04.06.2025**
(21) Application number: 23845400.3
(22) Date of filing: 19.07.2023
(51) Int. Cl.: A01D 34/00, A01D 69/02

(54) **DISABLING DEVICE AND LAWN MOWER**

(30) Priority: 27.07.2022 CN 202221959098 U; 03.11.2022 CN 202222932430 U; 03.11.2022 CN 202211373772; 03.11.2022 CN 202222930129 U; 21.11.2022 CN 202211462058; 21.11.2022 CN 202223096710 U; 25.11.2022 CN 202211488391; 20.12.2022 CN 202211639413; 27.12.2022 CN 202223491899 U
(71) Applicant: Greenworks (Jiangsu) Co., Ltd., Changzhou, Jiangsu 213023 (CN)
(72) Inventor: ABRAHAMSSON, Oscar, hangzhou, Jiangsu 213023 (CN); ARNELL, Thomas, hangzhou, Jiangsu 213023 (CN); PU, Zhigao, hangzhou, Jiangsu 213023 (CN); JONSSON, Henrik, hangzhou, Jiangsu 213023 (CN); CAO, Jin, hangzhou, Jiangsu 213023 (CN); GAO, Jie, hangzhou, Jiangsu 213023 (CN); LI, Wanghao, hangzhou, Jiangsu 213023 (CN); XU, Xinkai, hangzhou, Jiangsu 213023 (CN); ZHANG, Tao, hangzhou, Jiangsu 213023 (CN)
(74) Representative: Bergenstråhle & Partners AB
(86) International application number: PCT/CN2023/108118
(87) International publication number: WO 2024/022189

(57) **Abstract**

The disclosure provides a disabling device and a mower. The disabling device includes a fixing assembly and a knob assembly. The fixing assembly includes a fixing base, an elastic component and a connecting component. The fixing base is provided with a penetrating groove, a first groove, a second groove and a third groove. The knob assembly includes a knob handle and a connecting rod extending downward from a bottom of the knob handle. The knob handle is provided with a protruding toggling part, and a protruding part is arranged on an outer side wall of the connecting rod. When the protruding part is respectively positioned in the first groove, the second groove and the third groove, the knob assembly is respectively in a start state, a close state and a release state, thereby realizing a switching of the disabling device in different gears.

## Description

### CROSS REFERENCE TO RELATED APPLICATION

The present application is a continuation Application of PCT application No. PCT/CN2023/108118 filed on July 19, 2023, which claims the benefit of CN202222932430.X filed on November 3, 2022, CN202211373772.0 filed on November 3, 2022, CN202222930129.5 filed on November 3, 2022, CN202221959098.X filed on July 27, 2022, CN202223491899.0 filed on December 27, 2022, CN202211462058.9 filed on November 21, 2022, CN202223096710.8 filed on November 21, 2022, CN202211488391.7 filed on November 25, 2022 and CN202211639413.5 filed on December 20, 2022. All the above are hereby incorporated by reference for all purposes.

### TECHNICAL FIELD

The disclosure belongs to a technical field of power tools, and specifically relates to a disabling device and a mower.

### BACKGROUND

Robotic mowers are mechanical tools used to trim lawns, vegetation, etc. It may save the working time of weeding workers and reduce a lot of human resources.

The robotic mower needs to be started by a key first, so that the mower is in different gear states, such as: activated state, close state, release state, etc. Different gears work independently of each other and cannot be switched at will. However, when the conventional robotic mower is switching gears, the user cannot clearly feel the position change of the key when switching between different gears, causing the user to turn the key to the wrong gear.

In view of this, it is necessary to improve the conventional key to solve the problems mentioned above.

### SUMMARY

The disclosure provides a novel disabling device to overcome defects that a tactile experience during a key switching process is not significant and causes a user's operation errors.

One or more embodiments of the disclosure provide the disabling device. The disabling device includes a fixing assembly, an elastic component, a connecting component and a knob assembly.

The fixing assembly includes a fixing base, the fixing base is provided with a penetrating groove, a first groove, a second groove and a third groove, and the first groove, the second groove and the third groove are all communicated with the penetrating groove.

The connecting component is located between the fixing base and the elastic component.

The knob assembly includes a knob handle and a connecting rod, the knob handle is provided with a protruding toggling part, the connecting rod extends downward from a bottom of the knob handle, and a protruding part is arranged on an outer side wall of the connecting rod.

The connecting rod is configured to pass through the penetrating groove and push the connecting component to compress the elastic component downward and rotate, when the protruding part is respectively positioned in the first groove, the second groove and the third groove, and the knob assembly is respectively in a start state, a close state and a release state.

In an embodiment of the disclosure, the first groove and the second groove are both concave grooves, the third groove is a through groove that penetrates the fixing base, and when the protruding part is accommodated in the third groove, the knob assembly is detachable from the fixing assembly.

In an embodiment of the disclosure, the second groove is located between the first groove and the third groove.

**In** an embodiment of the disclosure, the knob handle is provided with a fixing post extending downward from the bottom of the knob handle, and the connecting rod is sleeved on an outer side of the fixing post and fixed to the fixing post through a fastener.

In an embodiment of the disclosure, the fixing post is hexagonal shaped, the connecting rod is provided with an opening hole to accommodate the fixing post, the fixing post is provided with a fixing hole, the connecting rod is provided with a perforation hole communicated with the fixing hole, and the fastener is configured to pass through the perforation hole and extend into the fixing hole to be locked and fixed to the fixing hole.

**In** an embodiment of the disclosure, a magnet is arranged inside the toggling part, the magnet is configured to be matched with a switch, when the toggling part is in the start state, the magnet approaches the switch to enable the switch to be electrically conductive, and when the toggling part is in the close state or the release state, the magnet moves away from the switch to enable the switch to be disconnected.

In an embodiment of the disclosure, the switch is a reed switch.

In an embodiment of the disclosure, the connecting component is in a post-shaped, and includes a first connecting part and a second connecting part connected with the first connecting part, the first connecting part is provided with a supporting part protruding toward the penetrating groove to abut against the connecting rod in the penetrating groove, the second connecting part is arranged away from the supporting part, a diameter of the second connecting part is less than a diameter of the first connecting part, and the elastic component is sleeved on an outer side of the second connecting part and abut against the first connecting part.

In an embodiment of the disclosure, the connecting component further includes a third connecting part extending outward from an outer edge of the first connecting part, and an accommodating groove to accommodate the third connecting part is correspondingly arranged on the fixing base.

In an embodiment of the disclosure, the elastic component is a spring, and configured to abut against the connecting component and the connecting rod to fix the protruding part in the first groove, the second groove or the third groove.

One or more embodiments of the disclosure provide a mower. The mower includes a main body and the disabling device arranged on the main body, and the disabling device includes the fixing assembly, the elastic component, the connecting component and the knob assembly.

The fixing assembly includes the fixing base.

The fixing base is provided with the penetrating groove, the first groove, the second groove and the third groove, and the first groove, the second groove and the third groove are all communicated with the penetrating groove.

The connecting component is located between the fixing base and the elastic component.

The knob assembly includes the knob handle and the connecting rod.

The knob handle is provided with the protruding toggling part, the connecting rod extends downward from the bottom of the knob handle, and the protruding part is arranged on the outer side wall of the connecting rod.

The connecting rod is configured to pass through the penetrating groove and push the connecting component to compress the elastic component downward and rotate, when the protruding part is respectively positioned in the first groove, the second groove and the third groove, and the knob assembly is respectively in the start state, the close state and the release state.

In an embodiment of the disclosure, a switch is arranged inside the main body, a magnet is arranged inside the toggling part, when the toggling part is in the start state, the magnet approaches the switch to enable the switch to be electrically conductive, and when the toggling part is in the close state or the release state, the magnet moves away from the switch to enable the switch to be disconnected.

In an embodiment of the disclosure, the fixing base is fixedly connected with the main body, the first groove and the second groove are both concave grooves, the third groove is a through groove that penetrates the fixing base, and when the protruding part is accommodated in the third groove, the knob assembly is detachable from the fixing assembly.

In an embodiment of the disclosure, the knob handle is provided with the fixing post extending downward from the bottom of the knob handle, and the connecting rod is sleeved on the outer side of the fixing post and fixed to the fixing post through the fastener.

In an embodiment of the disclosure, the fixing post is hexagonal, the connecting rod is provided with the opening hole to accommodate the fixing post, the fixing post is provided with the fixing hole, the connecting rod is provided with the perforation hole communicated with the fixing hole, and the fastener passes through the perforation hole and extends into the fixing hole to be locked and fixed to the fixing hole.

In an embodiment of the disclosure, the connecting component is arranged in the post shape, and includes the first connecting part and the second connecting part connected with the first connecting part, the first connecting part is provided with the supporting part protruding toward the penetrating groove to abut against the connecting rod in the penetrating groove, the second connecting part is arranged away from the supporting part, the diameter of the second connecting part is less than the diameter of the first connecting part, and the elastic component is sleeved on the outer side of the second connecting part and abut against the first connecting part.

In an embodiment of the disclosure, the connecting component further includes the third connecting part extending outward from the outer edge of the first connecting part, and the accommodating groove to accommodate the third connecting part is correspondingly arranged on the fixing base.

In an embodiment of the disclosure, the elastic component is the spring, and configured to abut against the connecting component and the connecting rod to fix the protruding part in the first groove, the second groove or the third groove.

In an embodiment of the disclosure, the main body includes a chassis, a bottom of the chassis is provided with a through hole, and the mower further includes a cutting system and an adjusting mechanism.

The cutting system includes a cutting device and a cutting motor, an output shaft of the cutting motor extends from the through hole to below the chassis and is connected with the cutting device, and the cutting motor is slidably installed on the chassis.

The adjusting mechanism is fixedly installed on the chassis, and connected with the cutting system to drive the cutting system to move along a transverse direction of the mower.

In an embodiment of the disclosure, a sliding guiding component is arranged at the bottom of the chassis, and the sliding guiding component is arranged parallel to the transverse direction of the mower, and fixedly installed on the chassis.

In an embodiment of the disclosure, the driving assembly includes a driving motor and a housing, the driving motor is fixed and installed in the housing and is connected with the cutting assembly.

In an embodiment of the disclosure, a sliding guiding rail is arranged at a bottom of the housing, and the cutting system is slidably installed on the chassis through a sliding connection between the sliding guiding rail and the sliding guiding component.

In an embodiment of the disclosure, a threaded connecting rod is arranged on an outer side of the driving assembly, and the adjusting mechanism is threadedly connected with the threaded connecting rod.

In an embodiment of the disclosure, the adjusting mechanism includes an adjusting motor, a driving gear and a driven gear.

The adjusting motor is fixedly installed on the chassis.

The driving gear is fixedly connected with an output shaft of the adjusting motor.

The driven gear is threadedly connected with the threaded connecting rod and meshed with the driving gear.

In an embodiment of the disclosure, the adjusting mechanism further includes a control assembly, and the control assembly is electrically connected with the adjusting motor to control the adjusting motor to rotate forward or reverse.

In an embodiment of the disclosure, a sensor is arranged on the outer side of the driving assembly, and a plurality of sensing positions for triggering the sensor is arranged on the chassis at one side of the through hole, and the plurality of sensing positions is arranged along a transverse extending direction of the mower.

In an embodiment of the disclosure, a first end of the through hole is located at a first position close to a first side of the chassis, and a second end of the through hole is located at a middle position of the chassis or at a second position close to a second side of the chassis.

In an embodiment of the disclosure, a first sensing position and a second sensing position for triggering the sensor to enable the cutting system to be located in the middle position of the chassis and on one side of the chassis are arranged on the chassis on one side of the through hole, or a first sensing position, a second sensing position and a third sensing position for triggering the sensor to enable the cutting system to be located in the middle position of the chassis and on two sides of the chassis are arranged on the chassis on one side of the through hole.

In an embodiment of the disclosure, the mower further includes a motor cylinder, a threaded rod and a height adjustment assembly.

The cutting motor is located in the motor cylinder, and the motor cylinder is slidably installed on the chassis.

The threaded rod is connected with the motor cylinder.

The height adjustment assembly includes a height adjustment motor.

The height adjustment motor is configured to drive the threaded rod to enable the motor cylinder to move up and down relative to the chassis.

A threaded structure is arranged in a middle position of the threaded rod, and two sides of the threaded structure are in smooth rod structures.

In an embodiment of the disclosure, a plurality of sliding grooves arranged in a vertical direction is arranged on an inner side of the chassis, a plurality of sliding rails is arranged on an outer side wall of the motor cylinder, and the sliding rails are slidably installed in the sliding grooves.

In an embodiment of the disclosure, the sliding groove is fixed to an inner side wall of the chassis through bolts, or the sliding groove and the chassis are an integrally formed structure.

In an embodiment of the disclosure, the threaded rod is fixed on the motor cylinder.

In an embodiment of the disclosure, the height adjustment assembly includes a height adjustment motor, the driving gear and the driven gear.

The height adjustment motor is fixedly installed on the chassis.

The driving gear is fixedly connected with an output shaft of the height adjustment motor.

The driven gear is threadedly connected with the threaded rod and meshed with the driving gear.

When the height adjustment motor rotates, the driving gear is driven to rotate, then the driven gear is driven to rotate, and then the threaded rod is driven to move up and down.

In an embodiment of the disclosure, the height adjustment motor drives the threaded rod to rotate, thereby driving the motor cylinder to move up and down.

In an embodiment of the disclosure, a height adjustment assembly installation groove is further arranged inside the chassis, and the driving gear and the driven gear are located in the height adjustment assembly installation groove.

In an embodiment of the disclosure, the height adjustment assembly further includes a limiting plate, and the limiting plate is fixedly connected with the chassis and is located above the height adjustment assembly installation groove. The driving gear and the driven gear are located between the limiting plate and the chassis.

In an embodiment of the disclosure, the height adjustment assembly further includes the control assembly, and the control assembly is electrically connected with the height adjustment motor to control the height adjustment motor to rotate forward or reverse.

In an embodiment of the disclosure, hollow posts are concentrically arranged on two sides of the driven gear, and threads matching the threaded structure of the threaded rod are arranged on an inner wall of the hollow post.

In an embodiment of the disclosure, when the height adjustment motor drives the threaded rod to move up and down, after the driven gear reaches the smooth rod structure of the threaded rod from the threaded structure of the threaded rod, the threaded rod cannot continue to move up and down.

In an embodiment of the disclosure, the height adjustment mechanism further includes a distance measuring assembly. The distance measuring assembly includes a distance measuring sensor and a receiving part. The distance measuring sensor is fixedly installed on the inner side of the chassis, and the receiving part is fixedly installed on one side of a top of the cutting motor and is located above the distance measuring sensor.

One or more embodiments of the disclosure provide a mower. The mower includes a chassis, a cutting system, a threaded rod and a height adjustment assembly.

Walking assemblies are arranged on two sides of the bottom of the chassis.

The cutting system includes a knife blade and the cutting motor, the output shaft of the cutting motor is connected with the knife blade, and the knife blade is located below the chassis.

The threaded rod is arranged on one side of the cutting motor, and the threaded rod is arranged in the vertical direction. Wherein, the threaded structure is arranged in the middle position of the threaded rod, and the two sides of the threaded structure are the smooth rod structures.

The height adjustment assembly is installed between the cutting motor and the chassis. The height adjustment assembly is connected with the threaded rod to adjust a longitudinal movement of the cutting system along the mower.

One or more embodiments of the disclosure provide a mower. The mower includes a chassis, a cutting assembly, a cutting motor, a motor cylinder, a threaded rod and a height adjustment assembly.

Walking assemblies are arranged on the two sides of the bottom of the chassis.

The output shaft of the cutting motor is connected with the cutting assembly, and the cutting assembly is located below the chassis.

The cutting motor is located in the motor cylinder, and the motor cylinder is slidably installed on the chassis.

The threaded rod is connected with the motor cylinder.

The height adjustment assembly includes the height adjustment motor.

The height adjustment motor is configured to drive the threaded rod to enable the motor cylinder to move up and down relative to the chassis.

The threaded structure is arranged in the middle position of the threaded rod, and the two sides of the threaded structure are the smooth rod structures.

The height adjustment assembly includes a sensing device and a plurality of height adjustment triggering positions for triggering the sensing device, the sensing device is arranged on the inner side of the chassis, and the plurality of height adjustment triggering positions is arranged on the outer side wall of the motor cylinder along the vertical direction. Wherein, a highest triggering position and a lowest triggering position correspond to the smooth rod structures on the two sides of the threaded structure respectively.

One or more embodiment of the disclosure provide a height adjustment method of the cutting system of the mower, and the height adjustment method includes operations as follows.

The mower is activated. The control system controls the height adjustment motor to rotate, and under a cooperation of the height adjustment assembly and the threaded structure in the threaded rod, the cutting system is driven to return to a zero point. Wherein, the zero point is the corresponding highest triggering position or the lowest triggering position on the smooth rod structure on the two sides of the threaded structure.

A height is selected from preset heights as a target adjustment height of the cutting system. Wherein, the preset heights correspond one-to-one to the plurality of the height adjustment triggering positions on the motor cylinder, and each preset height corresponds to a triggering time.

The control system controls the height adjustment motor to rotate to control a movement of the cutting system. When the sensing device is triggered with corresponding triggering times, the control system controls the height adjustment motor to stop rotating, and the cutting system stops at the target adjustment height to complete a height adjustment of the cutting system.

Wherein, when the highest triggering position or the lowest triggering position triggers the sensing device, the control system controls the height adjustment motor to stop rotating and the cutting system stops moving.

In an embodiment of the disclosure, controlling the cutting system to return to the zero point includes operations as follows.

The mower is activated.

The control system controls the height adjustment motor to rotate forward or reverse, and drives the cutting system to move upward or downward under a cooperation between the height adjustment assembly and the threaded structure in the threaded rod. During the movement of the cutting system, the sensing device is triggered in sequence by the plurality of height adjustment triggering positions on the motor cylinder.

When the control system does not receive a signal that the sensing device is triggered again within a preset time period, the cutting system is at a highest point or a lowest point. At this time, the control system sets the highest point or the lowest point as the zero point of the cutting system.

In an embodiment of the disclosure, the height adjustment method further includes that each time the target adjustment height of the cutting system is switched, the control system controls the cutting system to return to the zero point and then move to the switched target adjustment height.

One or more embodiments of the disclosure provide a cutting device. The cutting device includes the driving assembly, the cutting assembly and a plate assembly.

The driving assembly includes the cutting motor, a driving shaft extending from the cutting motor, and a driving component assembled at a tail end of the driving shaft.

The cutting assembly includes a cutting disc, an extending shaft and a knife blade arranged on the cutting disc, an accommodating groove and a perforation hole are arranged on a top of the cutting disc.

The plate assembly includes a flat plate and a connecting cover located between the cutting disc and the flat plate, and the connecting cover is fixedly connected with the flat plate.

Wherein, the extending shaft is configured such that a first end of the extending shaft is accommodated in the accommodating groove and is fixedly connected with the cutting disc and the driving component, and a second end of the extending shaft passes through the perforation hole, extends into the connecting cover and is movably connected with the connecting cover. A central axis of the extending shaft and a central axis of the driving shaft are located in a same straight line. When the cutting motor drives the driving shaft to rotate, the driving component drives the extending shaft and the cutting disc to rotate synchronously, and the plate assembly remains stationary.

In an embodiment of the disclosure, the plate assembly further includes a ball bearing and a fixing component. The ball bearing is sleeved on an outer side of the extending shaft to flexibly connect the extending shaft and the connecting cover. The fixing component is configured to be inserted into the extending shaft from a bottom of the extending shaft so that the extending shaft, the ball bearing and the connecting cover are relatively fixed.

In an embodiment of the disclosure, the plate assembly further includes a first washer sleeved on the fixing component. When the fixing component is fixed in the extending shaft, the first washer is clamped and fixed between the ball bearing and the fixing component.

In an embodiment of the disclosure, the connecting cover is provided with a through hole at a top of the connecting cover and an accommodating passage communicated to and coaxially arranged with the through hole. A diameter of the accommodating passage is larger than a diameter of the through hole, the ball bearing is accommodated in the accommodating passage, an outer ring of the ball bearing is fitted with an inner wall surface of the accommodating passage, and the extending shaft passes through the ball bearing.

In an embodiment of the disclosure, a bottom of the cutting disc is provided with a protruding ring, and the top of the connecting cover is further provided with a concave groove surrounding the through hole. When the connecting cover is assembled to the bottom of the cutting disc, the extending shaft passes through the through hole and the protruding ring is accommodated in the concave groove.

In an embodiment of the disclosure, the accommodating groove is provided with a hexagonal inner cavity, and the driving component is also hexagonal shaped.

In an embodiment of the disclosure, the perforation hole passes through a bottom wall of the accommodating groove, and the driving component is accommodated in the accommodating groove and is located on an upper surface of the extending shaft.

In an embodiment of the disclosure, the extending shaft is T-shaped, and includes a fixing part and an extending part arranged perpendicular to the fixing part. The fixing part is accommodated in the accommodating groove and fits with the bottom wall, and the extending part passes through the perforation hole.

In an embodiment of the disclosure, a first locking hole is arranged on the bottom wall, a second locking hole is correspondingly arranged on the fixing part, and a third locking hole is correspondingly arranged on the driving component. A locking component passes through the first locking hole, the second locking hole and the third locking hole to lock and fix the cutting disc, the extending shaft and the driving component.

In an embodiment of the disclosure, the bottom wall is further provided with a positioning post, the fixing part is provided with an opening groove, and the positioning post passes through the opening groove so that the fixing part is positioned and accommodated in the accommodating groove.

In an embodiment of the disclosure, the accommodating groove is provided with the hexagonal inner cavity, and the fixing part is circular shaped.

One or more embodiments of the disclosure provide a mower. The mower includes a main body and a cutting device arranged at a bottom of the main body. The cutting device includes a driving assembly, a cutting assembly and a plate assembly.

The driving assembly includes the cutting motor, the driving shaft extending from the cutting motor, and the driving component assembled at the tail end of the driving shaft.

The cutting assembly includes the cutting disc, the extending shaft and the knife blade arranged on the cutting disc, the accommodating groove and the perforation hole are arranged on the top of the cutting disc.

The plate assembly includes the flat plate and the connecting cover located between the cutting disc and the flat plate, and the connecting cover is fixedly connected with the flat plate.

Wherein, the extending shaft is configured such that the first end of the extending shaft is accommodated in the accommodating groove and is fixedly connected with the cutting disc and the driving component, and the second end of the extending shaft passes through the perforation hole, extends into the connecting cover and is movably connected with the connecting cover. The central axis of the extending shaft and the central axis of the driving shaft are located in the same straight line. When the cutting motor drives the driving shaft to rotate, the driving component drives the extending shaft and the cutting disc to rotate synchronously, and the plate assembly remains stationary.

In an embodiment of the disclosure, the plate assembly further includes the ball bearing and the fixing component. The ball bearing is sleeved on the outer side of the extending shaft to flexibly connect the extending shaft and the connecting cover. The fixing component is configured to be inserted into the extending shaft from the bottom of the extending shaft so that the extending shaft, the ball bearing and the connecting cover are relatively fixed.

In an embodiment of the disclosure, the plate assembly further includes the first washer sleeved on the fixing component. When the fixing component is fixed in the extending shaft, the first washer is clamped and fixed between the ball bearing and the fixing component.

In an embodiment of the disclosure, the connecting cover is provided with the through hole at the top of the connecting cover and the accommodating passage communicated with the through hole and coaxially arranged with the through hole. The diameter of the accommodating passage is larger than the diameter of the through hole, the ball bearing is accommodated in the accommodating passage, the outer ring of the ball bearing is fitted with the inner wall surface of the accommodating passage, and the extending shaft passes through the ball bearing.

In an embodiment of the disclosure, the bottom of the cutting disc is provided with the protruding ring, and the top of the connecting cover is further provided with the concave groove surrounding the through hole. When the connecting cover is assembled to the bottom of the cutting disc, the extending shaft passes through the through hole and the protruding ring is accommodated in the concave groove.

In an embodiment of the disclosure, the perforation hole passes through the bottom wall of the accommodating groove, and the driving component is accommodated in the accommodating groove and is located on the upper surface of the extending shaft.

In an embodiment of the disclosure, the extending shaft is T-shaped, and includes the fixing part and an extending part arranged perpendicular to the fixing part. The fixing part is accommodated in the accommodating groove and fits with the bottom wall, and the extending part passes through the perforation hole.

In an embodiment of the disclosure, the first locking hole is arranged on the bottom wall, the second locking hole is correspondingly arranged on the fixing part, and the third locking hole is correspondingly arranged on the driving component. The locking component passes through the first locking hole, the second locking hole and the third locking hole to lock and fix the cutting disk, the extending shaft and the driving component.

In an embodiment of the disclosure, the bottom wall is further provided with the positioning post, the fixing part is provided with the opening groove, and the positioning post passes through the opening groove so that the fixing part is positioned and accommodated in the accommodating groove.

In an embodiment of the disclosure, the accommodating groove is provided with a hexagonal inner cavity, the driving component is also hexagonal shaped, and the fixing part is circular shaped.

One or more embodiments of the disclosure provide a mower. The mower includes a driving assembly, a chassis, a first installation component, a locking component and a second installation component.

The driving assembly includes a connecting shaft.

A side wall of the chassis is provided with a through hole.

The first installation component is sleeved on an outer side of the connecting shaft, and the first installation component includes a connecting part and an assembling part, the connecting part is used to pass through the through hole and partially extend into the chassis.

The locking component is used to lock and fix with a tail end of the connecting shaft to limit the first installation component between the driving assembly and the locking component.

The second installation component is arranged in the chassis and fixedly connected with the connecting part. The second installation component includes a reinforcing part.

When the first installation component is fixedly connected with the second installation component, the assembling part and the reinforcing part are respectively located on two sides of the through hole and mutually squeeze the side wall of the chassis to achieve a fixed connection between the driving assembly and the chassis.

In an embodiment of the disclosure, the connecting shaft is provided with a limiting block, the first installation component is provided with a first installation hole, and the connecting shaft passes through the first installation hole and is connected with the locking component to limit the first installation component between the locking component and the limiting block.

In an embodiment of the disclosure, the connecting shaft is further provided with a limiting surface, and the first installation hole is provided with a limiting wall. After the connecting shaft passes through the first installation hole, the limiting wall abuts against the limiting surface, so that the first installation component and the connecting shaft remain relatively stationary.

In an embodiment of the disclosure, the driving assembly further includes a gasket, and the gasket is sleeved on the outer side of the connecting shaft and located between the limiting block and the first installation component.

In an embodiment of the disclosure, the assembling part is fixedly connected with the connecting part and is arranged at one end of the connecting part close to the driving assembly. The chassis is provided with a positioning structure, and the positioning structure is arranged on the outer side wall of the chassis and surrounds the through hole. The assembling part is matched with the positioning structure to realize a connection and positioning between the first installation part and the chassis.

In an embodiment of the disclosure, the assembling part includes an assembling groove and a positioning component arranged in the assembling groove, the positioning structure includes a positioning plate and a positioning post, the positioning plate is accommodated in the assembling groove, and the positioning component is connected with the positioning post.

In an embodiment of the disclosure, the first installation component further includes a sealing component arranged in the assembling groove, and one end of the positioning plate away from the chassis abuts against the sealing component.

In an embodiment of the disclosure, the assembling part further includes a concave groove and a separating board separating the concave groove from the assembling groove, the positioning structure further includes a protruding bar and an accommodating groove arranged between the protruding bar and the positioning plate, the separating board is accommodated in the accommodating groove, and the protruding bar is accommodated in the concave groove.

In an embodiment of the disclosure, the second installation component is sleeved on an outer side of the connecting part and includes a second installation hole for accommodating the connecting part. An outer side wall of the connecting part is provided with an external thread, and an inner side wall of the second installation hole is correspondingly provided with an internal thread, so that the connecting part extends into the second installation hole and is threadedly connected with the second installation component.

In an embodiment of the disclosure, the reinforcing part is arranged at a middle position of the second installation component, and the reinforcing part is provided with saw teeth protruding toward the side wall of the chassis to engage with the side wall of the chassis.

Beneficial effect of one or more embodiments of the disclosure is that the disabling device is provided with the first groove, the second groove and the third groove on the fixing base, and the protruding part is arranged on an outer side wall of the connecting rod at the bottom of the knob handle, so that the connecting rod may pass through the penetrating groove and push the connecting component downward to compress the elastic component, the protruding part may slide between the first groove, the second groove and the third groove, and then the knob handle may be moved between the start state, the close state and the release state. An arrangement of the elastic component enables the user to sense a current position of the knob handle through an elastic deformation of the elastic component, which effectively solves a defect that the key does not provide obvious prompts during the gear switching process, and causes user operation errors.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a schematic structural view of a mower according to an embodiment of the disclosure.
FIG. 2 is an exploded schematic structural view of the mower according to an embodiment of the disclosure.
FIG. 3 is a schematic structural view of a chassis of the mower according to an embodiment of the disclosure.
FIG. 4 is a top schematic view of a cutting system located at a side of the chassis according to an embodiment of the disclosure.
FIG. 5 is a bottom schematic view of the cutting system located at the side of the chassis according to an embodiment of the disclosure.
FIG. 6 is a top schematic view of the cutting system located at a middle of the chassis according to an embodiment of the disclosure.
FIG. 7 is a bottom schematic view of a cutting system located at the middle of the chassis according to an embodiment of the disclosure.
FIG. 8 is a first schematic structural view of the mower from another angle according to an embodiment of the disclosure.
FIG. 9 is a schematic structural view of a height adjustment mechanism of the mower according to an embodiment of the disclosure.
FIG. 10 is a schematic structural view of a height adjustment assembly installation housing in the height adjustment mechanism according to an embodiment of the disclosure.
FIG. 11 is a schematic structural view of a corporation between the height adjustment assembly and a cutting motor according to an embodiment of the disclosure.
FIG. 12 is a schematic exploded view of the height adjustment assembly and the cutting motor according to an embodiment of the disclosure.
FIG. 13 is a first schematic view of the cutting system located at a highest point according to an embodiment of the disclosure.
FIG. 14 is a first schematic view of the cutting system located at a lowest point according to an embodiment of the disclosure.
FIG. 15 is a schematic structural view of an overall structure of the mower according to an embodiment of the disclosure.
FIG. 16 is a schematic cross-sectional structural view of an entire mower according to an embodiment of the disclosure.
FIG. 17 is a schematic structural view of the height adjustment assembly of the mower according to an embodiment of the disclosure.
FIG. 18 is a schematic structural view of the height adjustment assembly installation housing in the height adjustment mechanism according to an embodiment of the disclosure.
FIG. 19 is a schematic matching view of a sensing device and a height adjustment triggering position according to an embodiment of the disclosure.
FIG. 20 is a second schematic view of the cutting system located at the highest point according to an embodiment of the disclosure.
FIG. 21 is a second schematic view of the cutting system located at the lowest point according to an embodiment of the disclosure.
FIG. 22 is a flowchart of a height adjustment method of the cutting system according to an embodiment of the disclosure.
FIG. 23 is a flowchart of the cutting system returning to a zero point according to an embodiment of the disclosure.
FIG. 24 is a second schematic structural view of the mower from another angle according to an embodiment of the disclosure.
FIG. 25 is an enlarged schematic structural view of an area A in FIG. 24.
FIG. 26 is a schematic structural view of a suspension mechanism of the mower according to an embodiment of the disclosure.
FIG. 27 is a schematic cross-sectional structural view of the suspension mechanism of the mower according to an embodiment of the disclosure.
FIG. 28 is an exploded schematic structural view of the suspension mechanism of the mower according to an embodiment of the disclosure.
FIG. 29 is a schematic view of a relationship between the displacement and force of an elastic component in the suspension mechanism during a movement of an outer housing according to an embodiment of the disclosure.
FIG. 30 is a perspective view of the mower according to an embodiment of the disclosure.
FIG. 31 is a partial exploded view of FIG. 30.
FIG. 32 is a combination view of a disabling device and a chassis in FIG. 31.
FIG. 33 is an exploded view of FIG. 32.
FIG. 34 is a perspective view of the chassis in FIG. 33.
FIG. 35 is a perspective view of the disabling device in FIG. 33.
FIG. 36 is an exploded view of the disabling device in FIG. 35.
FIG. 37 is a perspective view of a fixing base in FIG. 36.
FIG. 38 is a perspective view of the fixing base from another angle in FIG. 37.
FIG. 39 is a perspective view of a connecting component from another angle in FIG. 36.
FIG. 40 is an exploded view of a knob assembly in FIG. 26.
FIG. 41 is an exploded view of FIG. 40 from another angle.
FIG. 42 is a perspective view of a cutting device in FIG. 31.
FIG. 43 is a cross-sectional view of the cutting device in FIG. 32.
FIG. 44 is a partial enlarged view of FIG. 33.
FIG. 45 is an exploded view of the cutting device in FIG. 32.
FIG. 46 is an exploded view of a cutting assembly in FIG. 35.
FIG. 47 is a perspective view of a cutting disc in FIG. 36.
FIG. 48 is a partial enlarged view of FIG. 37.
FIG. 49 is a perspective view of an extending shaft in FIG. 36.
FIG. 50 is a perspective view of a driving component in FIG. 36.
FIG. 51 is a perspective view of the cutting disc from another angle in FIG. 37.
FIG. 52 is a partial enlarged view of FIG. 51.
FIG. 53 is a perspective view of a connecting cover in FIG. 36.
FIG. 54 is a perspective view of the connecting cover from another angle in FIG. 53.
FIG. 55 is a perspective schematic view of the mower according to an embodiment of the disclosure.
FIG. 56 is a perspective schematic view of the chassis and a driving assembly in FIG. 55.
FIG. 57 is an exploded view of the chassis, the driving assembly and an installation assembly in FIG. 56.
FIG. 58 is a cross-sectional view of the chassis, the driving assembly and the installation assembly in FIG. 56.
FIG. 59 is a partial enlarged view of part D in FIG. 58.
FIG. 60 is a cross-sectional view of a connecting shaft and the installation assembly in FIG. 57.
FIG. 61 is a perspective schematic view of the connecting shaft in FIG. 60.
FIG. 62 is a perspective schematic view of a first installation component in FIG. 60.
FIG. 63 is a partial perspective schematic view of the chassis in FIG. 56.
FIG. 64 is a perspective schematic view of a second installation component in FIG. 60.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

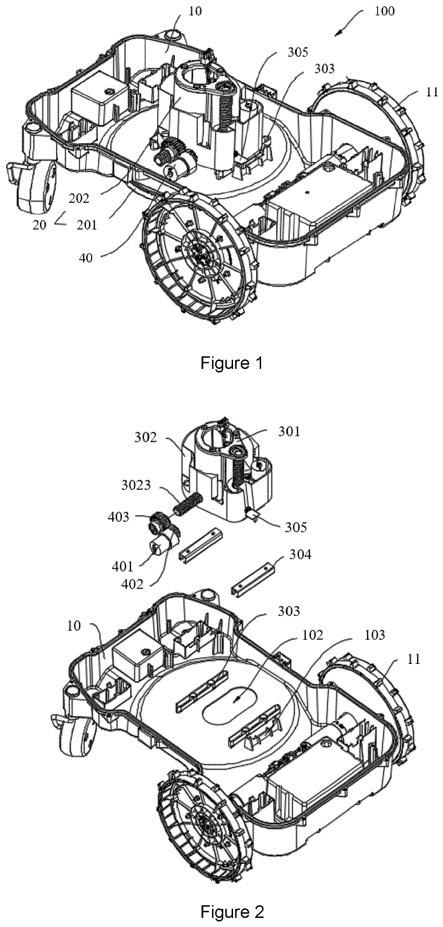

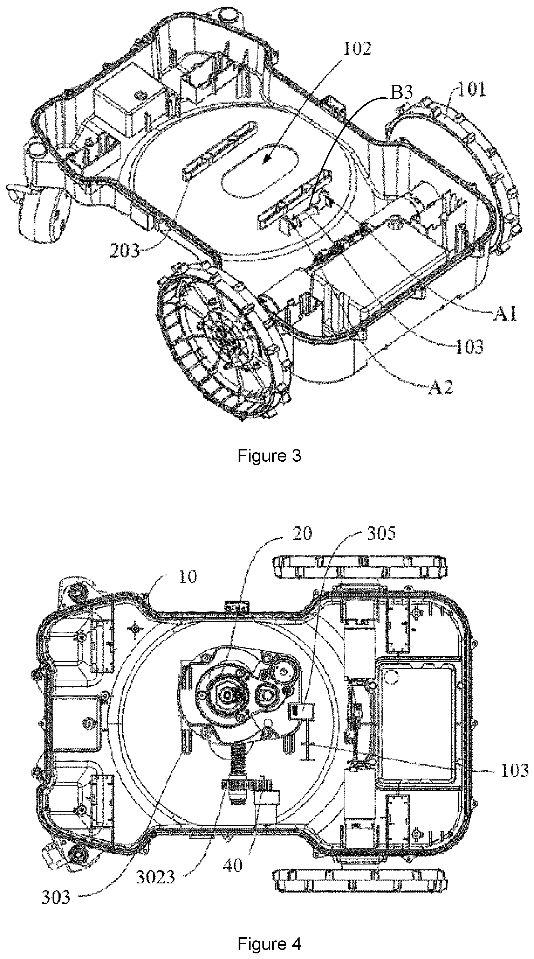

Please refer to FIG. 1 through FIG. 3. The disclosure provides a mower to solve a problem that a blade disc of the conventional mower is usually located at a center of the mower, which causes that even if walking wheels of the mower run along a boundary line, part of lawn cannot be cut and operator needs to cut it manually. This increases an operation intensity. Specifically, the mower 100 includes a chassis 10, a cutting system, an adjusting mechanism 40 and a control system. Walking assemblies 11 are arranged on two sides of the bottom of the chassis 10 to drive the mower 100 to walk automatically. The cutting system is slidably installed on the chassis 10, and is used for mowing while the mower 100 is self-propelled. The control system is electrically connected with the walking assemblies 11 and the cutting system of the mower 100, and is used for controlling the walking assemblies 11 to self-propelled and controlling the cutting system to mow. The adjusting mechanism 40 is installed on the chassis 10 and connected with the cutting system, and is used for adjusting a position of the mowing system on the chassis 10. Specifically, the cutting system includes a cutting device 20, so that a user may adjust a position of the cutting device 20 in the mower according to an actual condition of lawn, so as to change a distance of an edge of the lawn to be trimmed.

Please refer to FIG. 1 through FIG. 3. In this embodiment, the cutting device 20 includes a knife blade 201 and a cutting motor 202. The cutting motor 202 is installed on the chassis 10, and the knife blade 201 is located at a bottom of the chassis 10 and connected with the cutting motor 202. The cutting motor 202 drives the knife blade 201 to mow. Specifically, a through hole is arranged at the bottom of the chassis 10. The through hole is, for example, an oblong through hole 102, and a direction of the oblong through hole 102 is along a width direction of the chassis 10, which means along a transverse direction of the mower. An output shaft of the cutting motor 202 extends from the oblong through hole 102 to the bottom of the chassis 10 and is connected with the knife blade 201. The cutting motor 202 is slidably installed on the chassis 10, so that the adjusting mechanism 40 drives the cutting motor 202 to slide on the chassis 10, thereby changing a position of the cutting system.

Please refer to FIG. 1 through FIG. 3. In this embodiment, the cutting motor 202 includes a driving motor 301 and a housing 302. The driving motor 301 is fixedly installed in the housing 302, and a driving shaft 212 of the driving motor 301 is connected with the knife blade 201 to drive the knife blade 201 to mow. The housing 302 is slidably installed with the chassis 10.

Please refer to FIG. 1 through FIG. 3. In this embodiment, a sliding guiding component 303 is arranged at the bottom of the chassis 10, and the sliding guiding component 303 is fixedly installed on two sides of the oblong through hole 102 to play a guiding role. The sliding guiding component 303 is fixedly connected with the chassis 10. Correspondingly, a sliding guiding rail 304 matching the sliding guiding component 303 is further arranged at a bottom of the housing 302. Through a sliding cooperation between the sliding guiding rail 304 and the sliding guiding component 303, the cutting system and the chassis 10 are slidably installed together, so that the cutting system may slide along the sliding guiding component 303 to change the position of the cutting system on the chassis 10. It should be noted that, the sliding guiding component 303 and the oblong through hole 102 are arranged parallel to each other, which means parallel to the transverse direction of the mower, so that the cutting system may change its position along the width direction of the chassis 10.

Please refer to FIG. 1 through FIG. 3. In this embodiment, a threaded adjusting rod 3023 is arranged on an outer side of the housing 302. The adjusting mechanism 40 is fixedly installed on the chassis 10, and the adjusting mechanism 40 is threadedly connected with the threaded adjusting rod 3023, so as to drive the cutting system to move along the oblong through hole 102 under a cooperation between the sliding guiding rail 304 and the sliding guiding component 303, which means to move along the transverse direction of the mower. In an embodiment, the adjusting mechanism 40 includes an adjusting motor 401, a driving gear 402 and a driven gear 403. The adjusting motor 401 is fixedly installed on the chassis 10. The driving gear 402 is fixedly installed on an output shaft of the adjusting motor 401 and meshed with the driven gear 403 to realize a transmission. A threaded structure is arranged on an inner hole of the driven gear 403 for a threaded connection with the threaded adjusting rod 3023, which means that the driven gear 403 and the threaded connecting rod 2023 are threadedly connected together. The adjusting motor 401 drives the driving gear 402 to rotate, and the driven gear 403 is driven to rotate. Under a threaded cooperation between the driven gear 403 and the threaded adjusting rod 3023, the cutting system slides on the sliding guiding component 303 to change the position of the cutting system.

Please refer to FIG. 1 through FIG. 3. In this embodiment, the adjusting mechanism 40 further includes a control assembly. The control assembly is installed on the chassis 10 and is electrically connected with the adjusting motor 401 to drive the adjusting motor 401 to rotate forward or reverse, so that the cutting system moves along the sliding guiding component 303 toward one side of the chassis 10 or toward a middle position of the chassis 10. It should be noted that, in this embodiment, the control assembly of the adjusting mechanism 40 and the control system of the mower 100 may be integrated together.

Please refer to FIG. 1 through FIG. 3. In this embodiment, a sensor 305 is arranged on an outer side of the cutting motor 202. The sensor 305 is configured as a photoelectric gate sensor, for example. A plurality of sensing positions is arranged on the chassis 10 on one side of the oblong through hole 102, and the plurality of sensing positions is arranged along an extending direction of the oblong through hole 102, which means that the plurality of sensing positions is arranged along a transverse extending direction of the mower. The sensing positions are used to trigger the sensor 305. When the sensor 305 is triggered and activated, the adjusting motor 401 stops moving, so that the cutting system stays at a position where the sensing position is arranged. In an embodiment, the sensor 305 is arranged on the housing 302 of the cutting motor 202, and a base 103 is arranged on the chassis 10, the base 103 is located at an outer side the sliding guiding component 303 and is parallel to the sliding guiding component 303, and the plurality of sensing positions is arranged on the base 103. In some other embodiments, the sensing positions may be arranged on the housing 302, and correspondingly, a plurality of sensors may be arranged on the base 103.

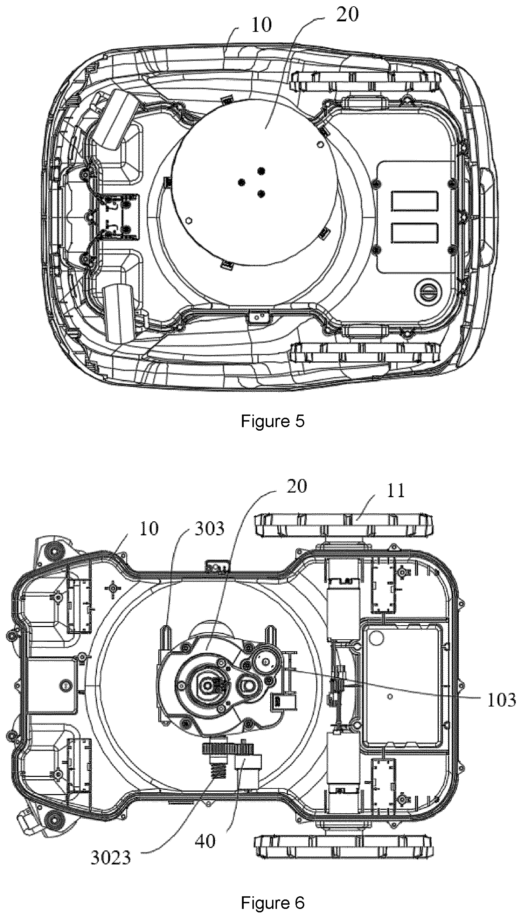

Please refer to FIG. 1, FIG. 3 through FIG. 7. In this embodiment, a first sensing position A1 and a second sensing position A2 are arranged on the base 103 on one side of the oblong through hole 102, and two ends of the oblong through hole 102 correspond to the first sensing position A1 and the second sensing position A2 respectively. When the cutting system slides to a first end of the oblong through hole 102, the sensor 305 is triggered and activated by the first sensing position A1, so that the adjusting motor 401 stops rotating, thereby enabling the cutting system to stay on one side of the chassis 10. When the cutting system slides to a second end of the oblong through hole 102, the sensor 305 is triggered and activated by the second sensing position A2, so that the adjusting motor 401 stops rotating, thereby enabling the cutting system to stay on the middle position of the chassis 10.

It should be noted that, please refer to FIG. 1, FIG. 3 through FIG. 7. The cutting system may stay at any position between the two ends of the oblong through hole 102, so that the user may adjust the position of the cutting system in the machine according to the actual condition of the lawn.

It should be noted that, please refer to FIG. 1, FIG. 3 through FIG. 7. By means of a cooperation between the sensor 305 arranged on the housing 302 and the plurality of sensing positions arranged on the chassis 10, when the cutting system slides to extreme positions at the two ends of the oblong through hole 102, the sensor 305 is triggered, so that the adjusting motor 401 stops rotating, and further the cutting system stops sliding, so as to avoid an excessive sliding of the cutting system after it moves to the extreme position, and a collision with the chassis 10, etc., thereby improving a safety of the mower during operation.

In some other embodiments, the first end of the oblong through hole 102 is located at a first position close to a first side of the chassis 10, and the second end of the oblong through hole 102 is located at a second position close to a second side of the chassis 10. Correspondingly, the first sensing position and the second sensing position are arranged on the chassis 10 on one side of the oblong through hole 102. When the cutting system slides to the first position of the oblong through hole 102, the sensor 305 is triggered and activated by the first sensing position to stop the adjusting motor 401 from rotating, thereby causing the cutting system to stay on the first side of the chassis 10. When the cutting system slides to the second position of the oblong through hole 102, the sensor 305 is triggered and activated by the second sensing position, so that the adjusting motor 401 stops rotating, thereby enabling the cutting system to stay on the second side of the chassis 10. It should be noted that, a third sensing position B3 may further be arranged on the chassis 10 at one side of the oblong through hole 102. The third sensing position B3 is located between the first sensing position and the second sensing position. The sensor 305 is triggered and activated by the third sensing position, so that the adjusting motor 401 stops rotating, thereby enabling the cutting system to stay on the middle position of the chassis 10.

It should be noted that, the cutting system may stay at any position between the first position and the second position, so that the user may adjust the position of the cutting system in the mower according to the actual condition of the lawn.

Please refer to FIG. 1, FIG. 3 through FIG. 7. In this embodiment, taking an example that the first end of the oblong through hole 102 is located on one side close to the chassis 10 and the second end of the oblong through hole 102 is located in the middle position of the chassis, performing the lawn mowing outside the boundary is a functional operation that performed before mowing or after mowing each time the machine goes out to perform the lawn mowing. When performing a boundary mowing, a control method of the mower is that when a robotic mower is activated by the user for the first time, the control system controls the adjusting motor 401 to start running, and the adjusting motor 401 stops running after the sensor 305 is activated by the second sensing position A2. At this time, the cutting system returns to a center position of the chassis 10 and controls the mower 100 to perform a lawn mowing. After the lawn mowing is completed, the control system controls the adjusting motor 401 to run in an opposite direction until the sensor 305 is activated again by the first sensing position A1, and the adjusting motor 401 stops moving. At this time, the cutting system is located on one side of the chassis 10 to be in a boundary mowing position, and the mower takes a charging center as a starting point, rides on a boundary line, and walks along the boundary line to perform the lawn mowing outside the boundary. After the task is completed, the control system controls the adjusting motor 401 to rotate, so that the cutting system returns to a center position of the machine again to perform a next task. It should be noted that, when power of the mower is low during the task, the mower stops cutting the lawn and is controlled to continue to return to the charging center along the boundary line for charging at this time. During this process, a walking time t1 is recorded from a time when stopping mowing to a time when returning to the charging center. When the charging is completed, the mower 100 is controlled to walk in an opposite direction from the charging center along the boundary line to continue mowing, and a walking time t2 is counted. When the walking time t2=t1, the boundary lawn mowing is completed. It should be noted that, in some other embodiments, the cutting system may be controlled to stay at different positions according to a distance of the mower 100 to a lawn edge to be mowed. It should be noted that, the mower 100 may further be controlled to perform the lawn mowing task after the lawn mowing task outside the boundary is completed.

The disclosure provides the mower. The mower provides the adjusting mechanism on the chassis to adjust the position of the cutting system, so that the user may adjust the position of the cutting system in the machine according to the actual condition of the lawn. Distances of lawn mowing edges are different when the cutting system is in different positions, thereby enabling a product to be intelligent and automated according to actual needs of the user, so as to better improve user experience.

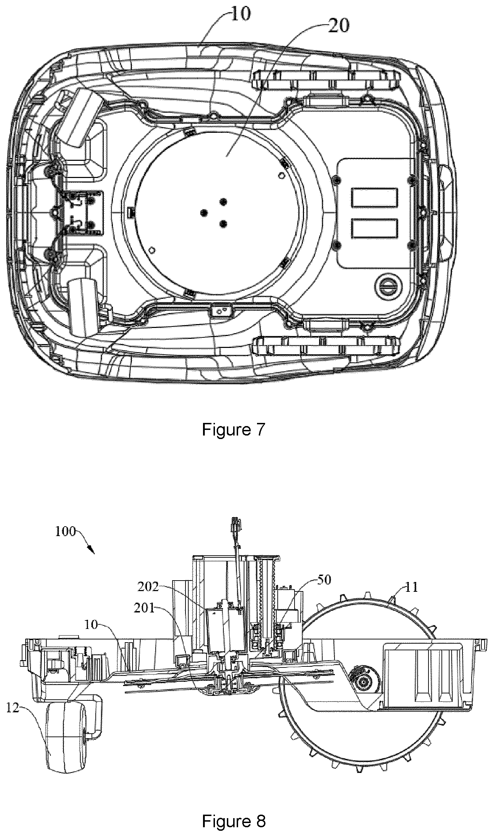

Please refer to FIG. 8. The mower further includes a height adjustment mechanism 50 to solve a problem that an upper limit and a lower limit of a height adjustment of a mowing system of a conventional mower require many sensors to achieve, which is not only costly, but also causes a damage to the height adjustment mechanism once the sensor fails. In an embodiment, the height adjustment mechanism 50 is installed on the chassis 10 and connected with the cutting system to adjust a height of a mowing system 20 on the chassis 10, so that the user may adjust a height of the cutting system in the mower according to the actual condition of the lawn, so as to change a mowing height of the mower.

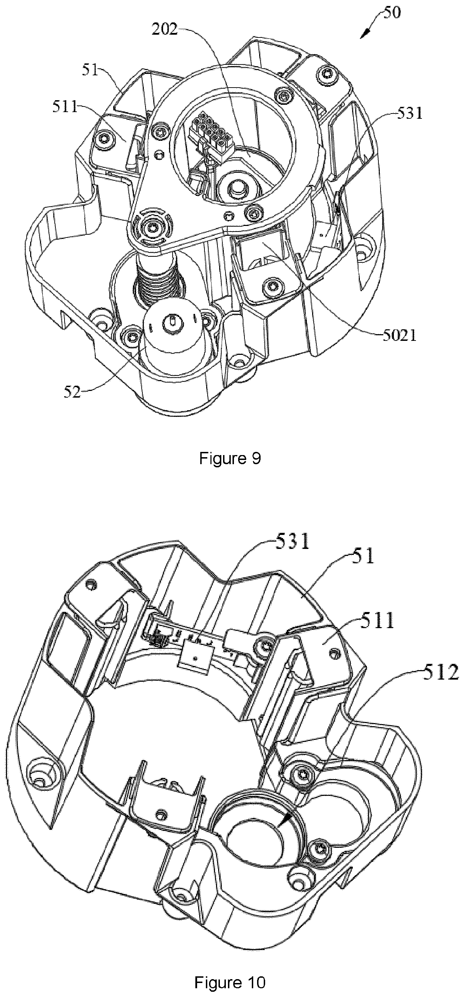

Please refer to FIG. 8 through FIG. 10. In this embodiment, the cutting device 20 includes the knife blade 201, the cutting motor 202 and a motor cylinder 203. The cutting motor 202 drives the knife blade 201 to rotate, and the cutting motor 202 is located in the motor cylinder 203. The motor cylinder 203 is slidably installed on the chassis 10. The knife blade 201 is located at the bottom of the chassis 10 and is connected with the output shaft of the cutting motor 202. The cutting motor 202 drives the knife blade 201 to mow.

Please refer to FIG. 8 through FIG. 10. In this embodiment, the chassis 10 includes a height adjustment assembly installation housing 51, and the height adjustment assembly 52 is installed between the cutting motor 202 and the chassis 10. In this embodiment, the height adjustment assembly 52 is installed between the cutting motor 202 and the height adjustment assembly installation housing 51, and the motor cylinder 203 is slidably installed in the height adjustment assembly installation housing 51. Wherein, the height adjustment assembly installation housing 51 is fixedly installed on the chassis 10 of the mower. It should be noted that, in some embodiments, the height adjustment assembly installation housing 51 may be a part of the chassis 10, or may be an integrally formed structure with the chassis 10.

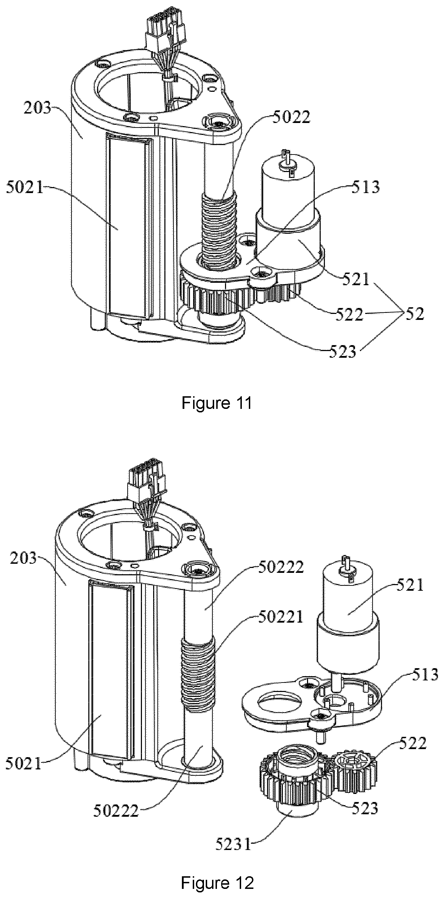

Please refer to FIG. 8 through FIG. 11. In this embodiment, a plurality of sliding grooves 511 arranged along a vertical direction is arranged on an inner side of the chassis 10. In this embodiment, the plurality of sliding grooves 511 is arranged on an inner side of the height adjustment assembly installation housing 51, and the sliding grooves 511 are arranged along a vertical direction of the height adjustment assembly installation housing 51. Correspondingly, a plurality of sliding rails 5021 corresponding to the sliding grooves 511 is further arranged on an outer side wall of the motor cylinder 203. The sliding grooves 511 are slidably installed on the sliding rails 5021, which means that the cutting motor 202 is slidably installed on the inner side of the height adjustment assembly installation housing 51 through a cooperation between the sliding rails 5021 and the sliding grooves 511, so that the cutting motor 202 may move up and down along the sliding grooves 511, thereby adjusting a height of the knife blade 201. It should be noted that, the sliding groove 511 may be an independent component, fixed to the inner side wall of the chassis 10 through bolts, or it may be integrally formed with the chassis 10. The sliding rail 5021 may be an independent component, fixed to an outer side wall of the height adjustment motor 521 through bolts, or it may be integrally formed with the height adjustment motor 521.

Please refer to FIG. 8, FIG. 9 and FIG. 11. In this embodiment, the height adjustment assembly 52 includes the height adjustment motor 521, a driving gear 522 and a driven gear 523. The height adjustment motor 521 is fixedly installed on the chassis 10, specifically, on the height adjustment assembly installation housing 51, the driving gear 522 is fixedly installed on an output shaft of the height adjustment motor 521, and an inner hole side wall of the driven gear 523 is provided with a threaded structure and meshed with the driving gear 522.

Please refer to FIG. 8, FIG. 9 and FIG. 11. In this embodiment, a threaded rod 5022 is arranged on one side of the cutting motor 202, and the threaded rod 5022 is arranged on one side of the motor cylinder 203 in the vertical direction. The inner hole side wall of the driven gear 523 is provided with the threaded structure to be threadedly connected with the threaded rod 5022. When the height adjustment motor 521 drives the driving gear 522 to rotate, the driving gear 522 drives the driven gear 523 to rotate. Under a threaded cooperation of the driven gear 523 and the threaded rod 5022, and since the height adjustment assembly 52 is fixed on the height adjustment assembly installation housing 51, the height adjustment motor 521 drives the cutting motor 202 to move up and down under a threaded cooperation, thereby adjusting a height of the knife blade 201. It should be noted that, in this embodiment, the threaded rod 5022 is fixedly installed on one side of the motor cylinder 203 through bolts.

Please refer to FIG. 8, FIG. 9 and FIG. 10. In this embodiment, the height adjustment assembly installation groove 512 is arranged in the height adjustment assembly installation housing 51. The driving gear 522 and the driven gear 523 are located in the height adjustment assembly installation groove 512, and the driving gear 522 and the driven gear 523 are limited in the height adjustment assembly installation groove 512 through a limiting plate 513. In an embodiment, the limiting plate 513 is fixedly connected with the height adjustment assembly installation housing 51 in the chassis 10, and the limiting plate 513 is located above the height adjustment assembly installation groove 313. The driving gear 522 and the driven gear 523 are located between the limiting plate 513 and the height adjustment assembly installation housing 51, and at the same time, the height adjustment motor 521 is fixed above the limiting plate 513, so that the height adjustment motor 52 is fixed on the height adjustment assembly installation housing 51.

Please refer to FIG. 8, FIG. 9 and FIG. 12. It should be noted that, in this embodiment, hollow posts 5231 are concentrically arranged on two sides of the driven gear 523 to facilitate a setting of the threaded structure. In an embodiment, a thread matching a threaded structure 50221 on the threaded rod 5022 is arranged on an inner wall of the hollow post 5231, and a bearing is sleeved on the hollow body 3231, which means that bearings are arranged on the two sides of the driven gear 523, respectively located between the limiting plate 513 and the hollow body 3231 on a first side of the driven gear 523 and between the height adjustment assembly installation housing 51 and the hollow body 3231 on a second side of the driven gear 523.

Please refer to FIG. 8, FIG. 9 and FIG. 12. In this embodiment, the threaded structure 50221 is arranged in a middle position of the threaded rod 5022, and smooth rod structures 50222 are arranged on two sides of the threaded structure 50221. In this embodiment, the driven gear 523 is threadedly connected with the threaded structure 50221, and the driven gear 523 is driven to rotate by the height adjustment motor 521, so that the motor cylinder 203 is driven to move up and down under a corporation of the driven gear 523 and the threaded structure 50221 in the threaded rod 5022, so as to drive the cutting motor 202 and the knife blade 201 to move up and down. When the mower is raised so that the driven gear 523 is located at the smooth rod structure 50222, even if the motor is still rotating, it cannot drive a cutting mechanism to move up and down, and even if a height limiting sensor fails, the mower will not be damaged.

In another embodiment, the threaded structure 50221 in the threaded rod 5022 is threadedly connected with the motor cylinder 203, and the driven gear 523 is fixedly connected with the threaded rod 5022. The threaded rod 5022 is driven to rotate through the height adjustment motor 521, and the motor cylinder 203 is driven to move up and down under an action of the threads of the motor cylinder 203 and the threaded rod 5022, thereby driving the cutting motor 202 and the knife blade 201 to move up and down.

Please refer to FIG. 8 through FIG. 12. In this embodiment, the height adjustment mechanism 50 further includes the control assembly. The control assembly is installed on the chassis 10 and is electrically connected with the height adjustment motor 521 to drive the height adjustment motor 521 to rotate forward or reverse, so that the cutting system moves up and down in the vertical direction. It should be noted that, in this embodiment, the control assembly of the height adjustment mechanism 50 and the control system of the mower 100 may be integrated together.

Please refer to FIG. 8 through FIG. 10. In this embodiment, the height adjustment mechanism 50 further includes a distance measuring assembly. The distance measuring assembly includes a distance measuring sensor 531 and a receiving part. The distance measuring sensor is fixedly installed in height adjustment assembly installation housing 51 in the chassis, and the receiving part is fixedly installed on one side of a top of the cutting motor 202 and is located above the distance measuring sensor 531. The distance measuring assembly is used to measure an adjusted height of the knife blade 201, so that the control system may control the height adjustment motor 521 to adjust the height of the knife blade 201 according to demand. In this embodiment, the distance measuring sensor 531 may be any one of an infrared sensor, a laser sensor, an ultrasonic sensor and a millimeter wave radar sensor.

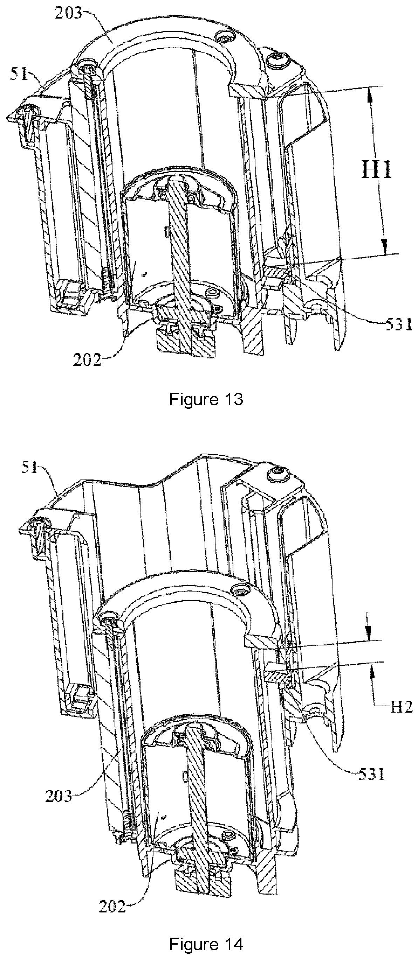

Please refer to FIG. 8 through FIG. 14. An adjustment process of the mower is, for example, when the mower is used for a first time, the user starts to activate the mower, and the control assembly controls the height adjustment motor 521 to operate to control the knife blade 201 to move up and down. When the driven gear 523 in the height adjustment assembly 52 is separated from the threaded structure 50221 in the threaded rod 5022 and is located on the smooth rod structures 50222 on the two sides of the driven gear 523, the cutting system stops moving up and down. At this time, a distance H1 or H2 detected by the sensor does not change within a certain period of time. At this time, the control assembly continues to control the height adjustment motor 521 to move for a certain period of time t. If the control assembly does not receive any distance change detected by the sensor during the period of time t, the control assembly stops controlling the height adjustment motor 521 to operate. At this time, the cutting system is at a highest or lowest point of a mowing height. The control assembly automatically sets a position at current time as a reference point "zero point". The control assembly controls the height adjustment motor 521 to run in an opposite direction to control an up and down movement of the cutting system. The control assembly uses the mowing height set by the user as a comparison height. When a height detected by the sensor is the same as the height set by the user, the height adjustment motor stops running. When the user is not using the mower for the first time, the control assembly receives mowing height data set by the user, and controls the height adjustment motor 521 to run. To ensure an accuracy of the mowing height, the control assembly needs to control the cutting system to return to the highest point or the lowest point, reset it to "zero point", and then re-control the height adjustment motor to run to achieve the mowing height set by the user.

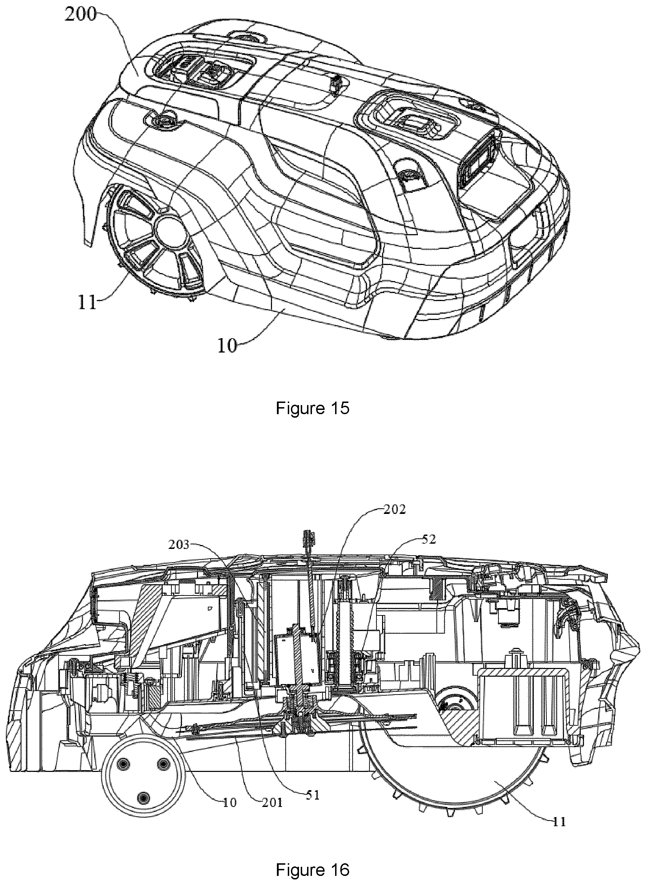

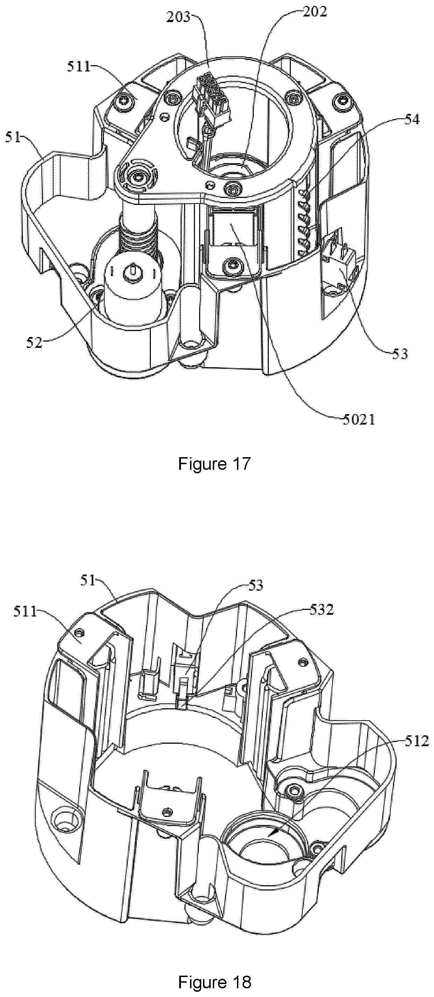

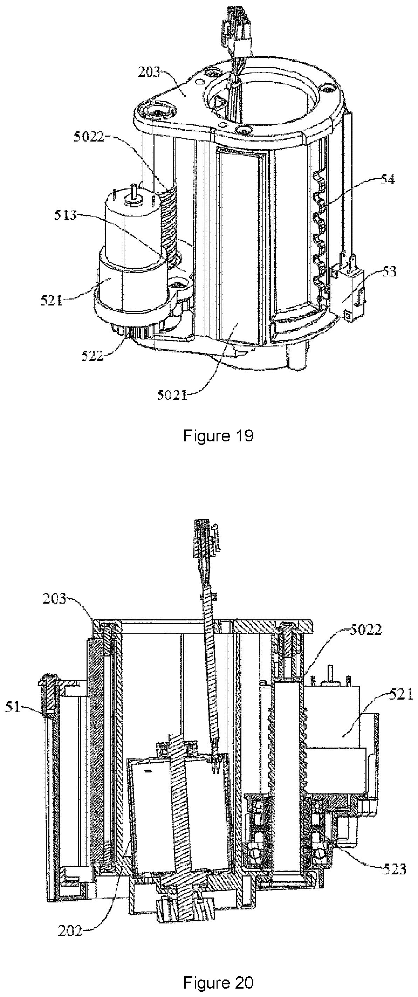

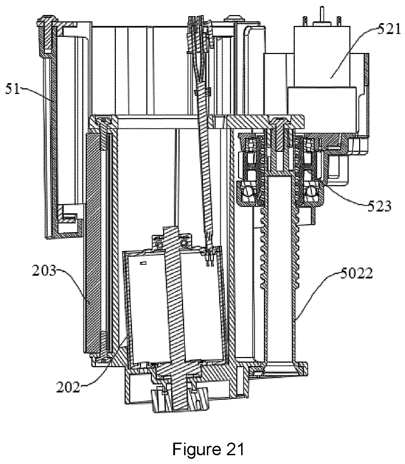

In some other embodiments, please refer to FIG. 15 through FIG. 21. A sensing device 53 is arranged in the housing 10, and correspondingly, a plurality of height adjustment triggering positions 54 is arranged on an outer side wall of the motor cylinder 203, and the height adjustment triggering positions 54 are used to trigger the sensing device 53. The plurality of height adjustment triggering positions 54 is arranged on the outer side wall of the motor cylinder 203 in the vertical direction. It should be noted that, each of the height adjustment triggering positions 54 corresponds to a preset height of the cutting system. When the sensing device 53 is triggered by a height adjustment triggering position 54 at a certain position, a height of the current cutting system is obtained by a number of times the sensing device 53 is triggered. In this embodiment, the sensing device 53 is configured as a micro switch, for example, and a plurality of triggering positions is arranged in the vertical direction on the outer side wall of the motor cylinder 203. For example, a roller 532 is arranged on the micro switch, and correspondingly, a plurality of arc grooves is arranged at intervals on the outer side wall of the motor cylinder 203. When the roller is located in the arc groove, the micro switch is not triggered. When the motor cylinder 203 moves up and down, the roller 532 is separated from the arc groove and is squeezed by a protrusion between two adjacent arc grooves to trigger the micro switch. When adjusting the height, the motor cylinder 203 is driven to move from top to bottom or from bottom to top, and the motor cylinder 203 passes through multiple height adjustment triggering positions 54, so that the sensing device 53 is triggered multiple times, and the current height of the cutting system is determined by triggering times. When the cutting system moves to a required height, the height adjustment motor 521 stops running, so that the height of the cutting system no longer changes. In some other embodiments, the sensing device 53 may further be configured as a photoelectric gate.

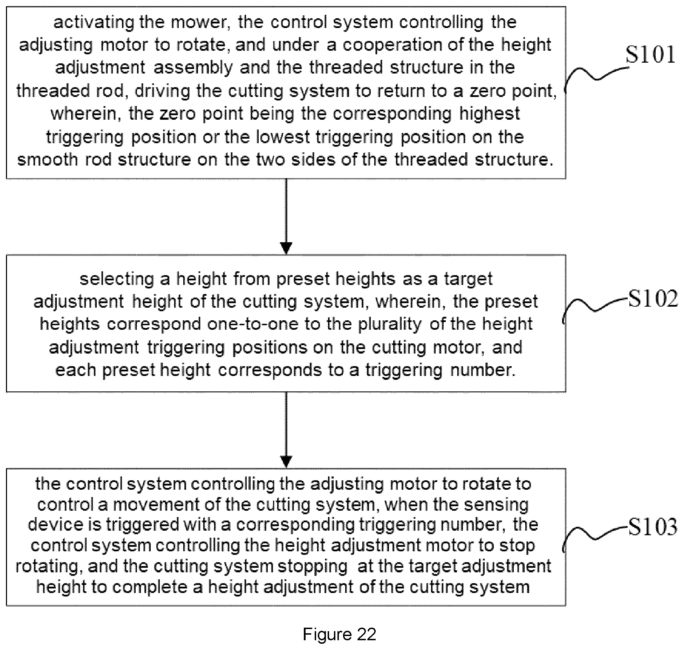

Please refer to FIG. 15 through FIG. 23. In this embodiment, the height adjustment assembly of the cutting system further applies a height adjustment method of the cutting system of the mower described in following embodiments, and the height adjustment method includes operations as follows.

S101, The mower is activated. The control system controls the height adjustment motor 521 to rotate, and under a cooperation of the height adjustment assembly and the threaded structure in the threaded rod, the cutting system 20 is driven to return to a zero point. Wherein, the zero point is the corresponding highest triggering position or the lowest triggering position on the smooth rod structure 2022 on the two sides of the threaded structure 50221.

Please refer to FIG. 15 through FIG. 23. It should be noted that, controlling the cutting system to return to the zero point includes operations as follows.

S201, The mower is activated.

S202, The control system controls the height adjustment motor 521 to rotate forward or reverse, and drives the cutting system to move upward or downward under a cooperation between the height adjustment assembly and the threaded structure in the threaded rod. During the movement of the cutting system, the sensing device 53 is triggered in sequence by the plurality of height adjustment triggering positions 54 on the motor cylinder 203.

S203, when the control system does not receive a signal that the sensing device 53 is triggered again within a preset time period, the cutting system is at a highest point or a lowest point. At this time, the control system sets the highest point or the lowest point as the zero point of the cutting system.

Please refer to FIG. 15 through FIG. 23. A specific process of adjusting the cutting system of the mower to return to the zero point is, for example, when the mower is used for the first time, the user starts to activate the machine, and the control system controls the height adjustment motor 521 to operate to control the knife blade 201 to move up and down. When the driven gear 523 in the height adjustment assembly 52 is separated from the threaded structure 50221 in the threaded rod 5022 and is located on the smooth rod structures 50222 on the two sides of the driven gear 523, the cutting system stops moving up and down. At this time, the control assembly continues to control the height adjustment motor 521 to move for a certain time t. If the control assembly does not receive a signal that the sensing device 53 is triggered again within the time period t, the control assembly stops controlling the height adjustment motor 521 to operate. At this time, the cutting system is at the highest or lowest point of the mowing height, and the control assembly automatically sets the highest or lowest point as the reference point "zero point".

S102, A height is selected from preset heights as a target adjustment height of the cutting system. Wherein, the preset heights correspond one-to-one to the plurality of the height adjustment triggering positions 54 on the cutting motor 202, and each preset height corresponds to a triggering time.

S103, The control system controls the height adjustment motor 521 to rotate to control a movement of the cutting system. When the sensing device 53 is triggered with a corresponding triggering time, the control system controls the height adjustment motor 521 to stop rotating, and the cutting system stops at the target adjustment height to complete a height adjustment of the cutting system. It should be noted that, the triggering times indicate the number of times the sensing device is triggered during a process of the cutting system moving from the zero point to the preset height.

It should be noted that, when the highest triggering position or the lowest triggering position triggers the sensing device, the control system controls the height adjustment motor 521 to stop rotating and the cutting system stops moving.

In this embodiment, for example, the plurality of the height adjustment triggering positions 54 set on the cutting system corresponds one-to-one to a preset mowing heights in a user's operation interface, and each preset height corresponds to the triggering time. When the user selects a preset height with a corresponding triggering time of three in the operation interface as a target adjustment height, the sensing device 53 is triggered three times during the movement of the cutting system and then notifies the control system to control the height adjustment motor 521 to stop running, thereby meeting user's setting requirements.

It should be noted that, in this embodiment, the height adjustment method further includes that each time the target adjustment height of the cutting system is switched, the control system controls the cutting system to return to the zero point and then move to the switched target adjustment height to ensure an accuracy of mowing height.

The disclosure provides the mower and the height adjustment method of the cutting system of the mower. The distance measuring sensor is arranged in the housing to detect the height of the cutting system in real time. The disclosure uses fewer sensors and has a lower cost. At the same time, the threaded rod with a smooth rod and the threaded structure is arranged, so that when a height of the mower is adjusted and the height exceeds a range of the threaded part, even if the motor is still rotating, the cutting mechanism cannot be driven to move up and down, and even if the height limiting sensor fails, the mower will not be damaged.

The disclosure provides the height adjustment mechanism of the cutting system of the mower and the mower. The distance measuring sensor is arranged in the housing to detect the height of the cutting system in real time. The disclosure uses fewer sensors and has the lower cost. At the same time, the threaded rod with a smooth rod and the threaded structure is arranged, so that when the height of the mower is adjusted and the height exceeds the range of the threaded part, even if the motor is still rotating, the cutting mechanism cannot be driven to move up and down, and even if the height limiting sensor fails, the mower will not be damaged.

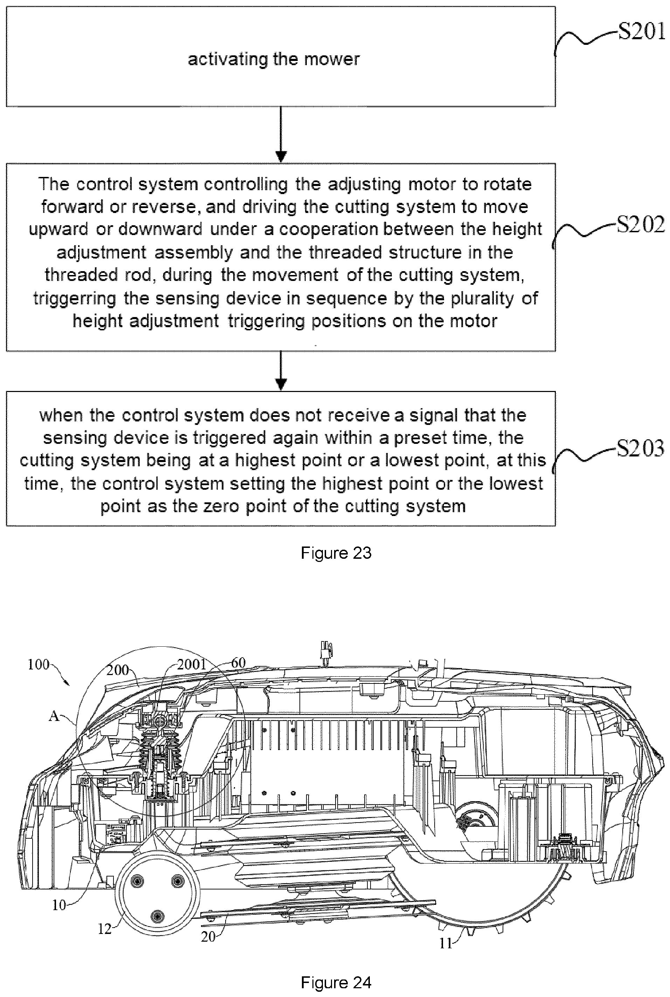

Please refer to FIG. 24. In this embodiment, an outer housing 200 is further arranged on an outer side of the chassis 10 to protect the chassis 10 and the user at the same time. A suspension mechanism 60 is arranged between the chassis 10 and the outer housing 200 to solve a problem that the conventional suspension structure has certain limitations in overcoming vibrations caused by collision or bumping during an operation of the mower and a relative movement between the outer housing and the chassis, which further leads to a problem of unreliable operation. The suspension mechanism 60 is used to flexibly connect the chassis 10 with the outer housing 200.

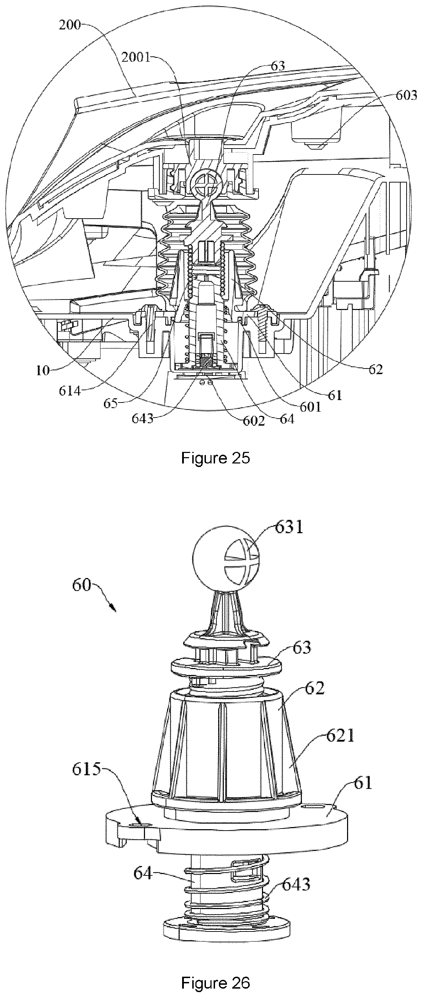

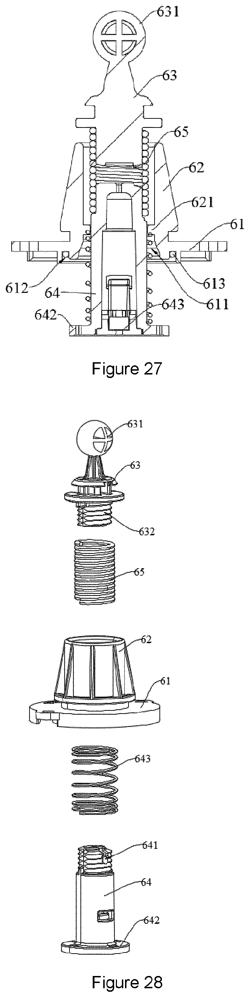

Please refer to FIG. 24 through FIG. 28. In this embodiment, the suspension device 60 includes a fixing bracket 61, a sleeve barrel 62, a first supporting post 63, a second supporting post 64 and an elastic component 65. The fixing bracket 61 is fixedly installed on the chassis 10, and the sleeve barrel 62 is fixedly arranged above the fixing bracket 61. A first end of the first supporting post 63 is connected with the outer housing 200, and a second end of the first supporting post 63 is connected with one end of the elastic component 65 and is located in the sleeve barrel 62. The second supporting post 64 is located below the first supporting post 63, a first end of the second supporting post 64 is connected with the chassis 10, and a second end of the second supporting post 64 is connected with the other end of the elastic component 65 and is located in the sleeve barrel 62. The elastic component 65 is located in the sleeve barrel 62, so that the outer housing 200 may move relative to the chassis 10 in a direction perpendicular to the chassis 10 and/or in a horizontal direction. It should be noted that the horizontal direction is a direction parallel to a ground, and the direction perpendicular to the chassis 10 is a direction perpendicular to the ground, which means the vertical direction.

Please refer to FIG. 24 through FIG. 28. In this embodiment, the first supporting post 63 is provided with a connecting part 631. Correspondingly, an installation cavity corresponding to the connecting part 631 is arranged in the outer housing 200, and the connecting part 631 is installed in the installation cavity. Specifically, in this embodiment, the connecting part 631 is arranged at a top of the first supporting post 63, and the connecting part 631 is, for example, set to a spherical structure. A connecting component 2001 is correspondingly arranged in the outer housing 200, and the connecting component 2001 is fixedly connected with the outer housing 200. The installation cavity is arranged in the connecting component 2001 and is adapted to the connecting part 631, which means that the connecting part 631 is installed in the installation cavity to fix the first supporting post 63 to the outer housing 200, so that when the outer housing 200 is moved by an external force, the first supporting post 63 is driven to move.

It should be noted that, in some embodiments, the connecting component 2001 may be set as a rubber structure. When the mower collides, the elastic component 65 does not directly return to an original state, but continues to vibrate. At this time, the elastic component 65 and the connecting component 2001 are deformed. Since the connecting component 2001 may play a damping role and can absorb vibration energy, the connecting component 2001 may be used to absorb part of the vibration energy, thereby greatly extending a duration life of the mower and reducing cost of use.

Please refer to FIG. 24 through FIG. 28. In this embodiment, the first supporting post 63 and the second supporting post 64 are respectively provided with a first thread 632 and a second thread 641 matching the elastic component 65 on one end close to each other, so that two ends of the elastic component 65 are threadedly connected with the first supporting post 63 and the second supporting post 64. Specifically, in this embodiment, one end of the first supporting post 63 is provided with the first thread 632 matching the elastic component 65, and one end of the second supporting post 64 is also provided with the second thread 641 matching the elastic component 65, so that a first end of the elastic component 65 is threadedly connected with the first supporting post 63 and a second end of the elastic component 65 is threadedly connected with the second supporting post 64.

Please refer to FIG. 24 through FIG. 28. In this embodiment, a pitch of the first thread 632 gradually increases from bottom to top, and a pitch of the second thread 641 is correspondingly arranged to gradually increase from top to bottom. When the elastic component 65 is screwed into the first supporting post 63 and the second supporting post 64, the elastic component 65 gradually tightens, resulting in an increase in pressures between the elastic component 65 and the first supporting post 63 and between the elastic component 65 and the second supporting post 64, thereby increasing frictions between the elastic component 65 and the first supporting post 63 and between the elastic component 65 and the second supporting post 64, so as to prevent the elastic component 65 from detaching from the first supporting post 63 and/or the second supporting post 64, which may cause rendering the suspension mechanism 60 ineffective.

Please refer to FIG. 24 through FIG. 28. In this embodiment, the fixing bracket 61 is provided with a first through hole 611, and in the vertical direction, a top of the second supporting post 64 passes through the fixing bracket 61 from the first through hole 611 and is located in the sleeve barrel 62 to be connected with the elastic component 65. Specifically, in this embodiment, the fixing bracket 61 is a cylindrical structure, and the first through hole 611 is opened at a center position of the fixing bracket 61. It should be noted that, an annular groove 612 is arranged at a bottom of the fixing bracket 61. The annular groove 612 is located at an outer side of the first through hole 611, and a sealing ring 613 is arranged in the annular groove 612 to enhance a waterproof performance of the chassis 10. It should be noted that, an annular protrusion 601 is arranged at a position on the chassis 10 corresponding to the annular groove 612. When the fixing bracket 61 is fixedly installed on the chassis 10, the sealing ring 613 is squeezed between the annular protrusion 601 and the fixing bracket 61 to enable the fixing bracket 61 to be tightly combined with the chassis 10 and improve the waterproof performance of the structure.

Please refer to FIG. 24 through FIG. 28. In this embodiment, the fixing bracket 61 is fixed to the chassis 10 through bolts 614. Specifically, second through holes 615 are arranged on two sides of the fixing bracket 61. The bolts 614 pass through the second through holes 615 and are threadedly connected with the chassis 10, thereby fixing the fixing bracket 61 to the chassis 10. In some other embodiments, the fixing bracket 35 may also be fixedly installed on the chassis 10 by means of, for example, buckle fit, interference fit, or the like.

Please refer to FIG. 24 through FIG. 28. In this embodiment, the sleeve barrel 62 is fixedly arranged above the fixing bracket 61, and the elastic component 65, and ends of a first supporting component 33 and a second supporting component 34 connected with the elastic component 65 are at least partially located in the sleeve barrel 62. In this embodiment, the sleeve barrel 62 and the fixing bracket 61 are an integral structure.

Please refer to FIG. 24 through FIG. 28. In this embodiment, when the mower 100 collides or bumps during a movement, a relative movement is generated between the outer housing 200 and the chassis 10 in the horizontal direction and/or the vertical direction. At this time, the first supporting post 63, the second supporting post 64 and the elastic component 65 in the suspension mechanism 60 also moves with the outer housing 200, so that the suspension mechanism 60 plays a buffering role when the mower 100 collides or bumps during the movement.

Please refer to FIG. 24 through FIG. 28. In this embodiment, a fixing head 642 is arranged at a bottom of the second supporting post 64, and a first sensor 602 is arranged in the chassis 10. The first sensor 602 is located below the fixing head 642 and is used to detect a displacement of the second supporting post 64. Specifically, in this embodiment, a first sensing structure corresponding to the first sensor 602 is arranged on one end of the second supporting post 64. For example, the first sensing structure is configured as a magnet 643, and the magnet 643 is installed on one end of the second supporting post 64. In some embodiments, the sensing structure may further be configured as a metal sheet, which may be arranged on a bottom surface of the fixing head 642. When the mower 100 collides or bumps during the movement, which may cause the outer housing 200 to move upward and/or forward relative to the chassis 10, the outer housing 200 drives the first supporting post 63 to move, and the second supporting post 64 moves upward under a driving action of the elastic component 65. If the first sensor 602 detects that the second supporting post 64 is displaced and the displacement exceeds a set value, a sensing signal is sent to the control assembly, and the control assembly sends a control signal to the cutting assembly to stop the mower.

Please refer to FIG. 24 through FIG. 28. It should be noted that, the annular protrusion 601 extends inward on an inner side wall of a bottom of the sleeve barrel 62, and the annular protrusion 601 is located around the second supporting post 64, which means that the annular protrusion 601 is arranged around one end of the second supporting post 64 located in the sleeve barrel 62 to limit a horizontal displacement of the second supporting post 64, so that the second supporting post 64 can only move in the vertical direction. A compression spring 643 is arranged between the fixing head 642 and the annular protrusion 601, a first end of the compression spring 643 abuts against a bottom surface of the annular protrusion 601, and a second end of the compression spring 643 abuts against an upper surface of the fixing head 642.

Please refer to FIG. 24 through FIG. 28. When the outer housing 200 moves upward in the vertical direction relative to the chassis 10, the outer housing 200 may drive the first supporting post 63 to move upward, and the second supporting post 64 may also move upward under the driving action of the elastic component 65. At this time, the compression spring 643 is compressed. When the external force disappears, the second supporting post 64, the elastic component 65 and the first supporting post 63 return to their initial positions under an elastic force of the compression spring 643, so that the mower 100 continues to work.

Please refer to FIG. 24 through FIG. 28. In this embodiment, a second sensor is further arranged on the chassis 10, and correspondingly, a second sensing structure 603 corresponding to the second sensor is arranged on the outer housing 200, and the second sensing structure 603 is configured as a magnet or a metal sheet. When the mower collides or bumps during the movement, which may cause the outer housing 200 to move toward the chassis 10, a displacement of the outer housing 200 is detected. If the second sensor detects that the outer housing 200 is displaced and the displacement exceeds the set value, the sensing signal is sent to the control assembly, and the control assembly sends the control signal to the cutting assembly to stop the mower.

Please refer to FIG. 24 through FIG. 28. In this embodiment, when the mower 100 collides or bumps during walking, causing the outer housing 200 to move horizontally relative to the chassis 10, the outer housing 200 drives the first supporting post 63 to move relative to the outer housing 200, so that the elastic component 65 is deformed in the horizontal direction. The elastic component 65 includes at least a first deformation stage and a second deformation stage. Wherein in the first deformation stage, the elastic component 65 is deformed until the elastic component 65 abuts against a top end of the sleeve barrel 62. In the second deformation stage, the elastic component 65 is restricted by the sleeve barrel 62, and under a restriction of the sleeve barrel 62, the part of the elastic component 65 located outside the sleeve barrel 62 continues to deform. In this embodiment, the elastic component 65 is for example a spring. It should be noted that, a force required for the elastic component 65 to deform in the second deformation stage is greater than a force required for the elastic component 65 to deform in the first deformation stage.

Please refer to FIG. 24 through FIG. 28. In the first deformation stage, the elastic component 65 is deformed as a whole under a driving action of the first supporting post 63 until the elastic component 65 abuts against the top end of the sleeve barrel 62. At this time, the first deformation stage ends, and the elastic component 65 is divided into a first part and a second part from an abutting position. The first part of the elastic component 65 is located in the sleeve barrel 62, the second part of the elastic component 65 is higher than the sleeve barrel 62. A length of the first part of the elastic component 65 is greater than a length of the second part of the elastic component 65. In an embodiment, the first part is from one end connected with the first supporting post 63 to the abutting position, and the second part is from one end connected with the second supporting post 64 to the abutting position, which means that the second part is the part of the elastic component 65 located inside the sleeve barrel 62 after the deformation in the first deformation stage, and the first part is the part of the elastic component 65 located outside the sleeve barrel 62 after the deformation in the first deformation stage. At this time, under a limiting action of the sleeve barrel 62, the elastic component 65 enters the second deformation stage, which means that the first part of the elastic component 65 located outside the sleeve barrel 62 continues to deform.

Please refer to FIG. 24 through FIG. 29. In a structure without the sleeve barrel 62, for example, an initial position of the elastic component 65 and the first supporting post 63 is P1. When driven by the outer housing 200, the elastic component 65 and the first support column 63 move to a position P2, and then move from the position P2 to a position P3. In the above process, a force applied to the elastic component 65 and a moving distance are linearly related. In this embodiment, when driven by the outer housing 200, the elastic component 65 enters the first deformation stage, so that the elastic component 65 and the first supporting post 63 move to the position P2. At this time, the elastic component 65 abuts against the top end of the sleeve barrel 62, so that the second part loses its function. At this time, the elastic component 65 enters the second deformation stage, which means that only the first part located outside the sleeve barrel 62 continues to deform, so that the elastic component 65 moves from the position P2 to the position P3, which means that in the second deformation stage, only the first part can continue to extend. But since the first part is shorter in length and has been stretched for a distance in a process of starting to move to abut against the sleeve barrel 62, if the first part is to continue to stretch, a greater external force is required to prevent the outer housing 200 from moving forward, which means to cause the mower 100 to collide, thereby achieving a maximum vibration energy absorption at a very low energy cost during a movement from the position P1 to the position P2, and improving a safety and a stability of the mower 100 during operation.

Please refer to FIG. 24 through FIG. 26. In this embodiment, a plurality of reinforcing ribs 621 is arranged on an outer circumference of the sleeve barrel 62 to improve a structural strength of the sleeve barrel 62 and avoid a damage to the sleeve barrel 62 during an abutment between the elastic component 65 and the sleeve barrel 62.

Please refer to FIG. 24. In this embodiment, the mower further includes a walking assembly 11 and the cutting device 20. The walking assembly 11 and the cutting device 20 are both installed on the chassis 10. The walking assembly 11 is used to drive the mower 100 to move on its own, and the cutting device 20 is used to perform a mowing operation during a self-moving process of the mower 100. It should be noted that, the mower 100 further includes a driving motor (not shown) for driving walking wheels to move on their own, the control assembly (not shown) for controlling an the driving motor and the cutting assembly to work, and a battery pack for providing power to the mower.

Please refer to FIG. 24. It should be noted that, in this embodiment, four suspension mechanisms 60 are arranged, and are respectively arranged at four corners of the chassis 10. Of course, in other embodiments, a number and an arrangement position of the suspension mechanism 60 may also be changed, which is not limited here.

The disclosure provides the suspension mechanism of the mower and the mower. Through fixing the sleeve barrel on the fixing bracket, the elastic component, and the ends of the first supporting component and the second supporting component connected with the elastic component are all located in the sleeve barrel. When the elastic component abuts against the top end of the sleeve barrel, the elastic component is divided into the first part and the second part from the abutting position. After the abutment, the second part fails, and the greater external force is required to act on the first part to enable the outer housing to continue to move, thereby preventing the outer housing from continuing to move forward, which means that the structure obtains maximum vibration energy absorption at the very small energy cost, thereby improving the safety and stability of the mower during operation.

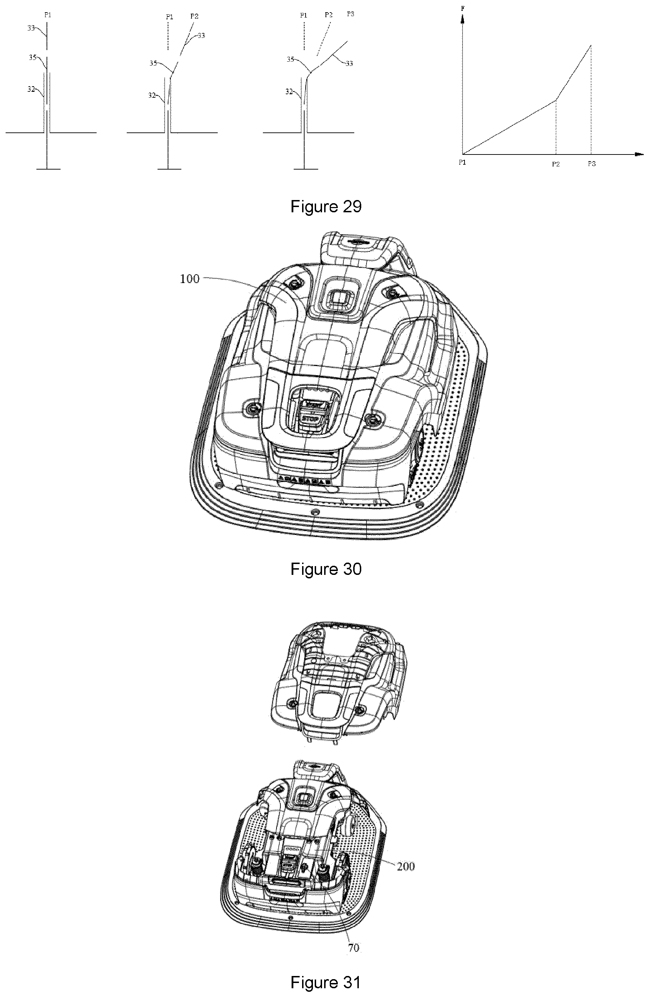

Please refer to FIG. 30 and FIG. 31. The disclosure provides the mower 100, the mower 100 includes a main body and a disabling device 70 arranged on the main body. The main body, as a main part of the mower 100, mainly includes the outer housing 200, the driving assembly and a power supply assembly installed in the outer housing 200, a mowing assembly installed at a bottom of the outer housing 200, and a walking wheel assembly for supporting and driving the outer housing 200 to walk.

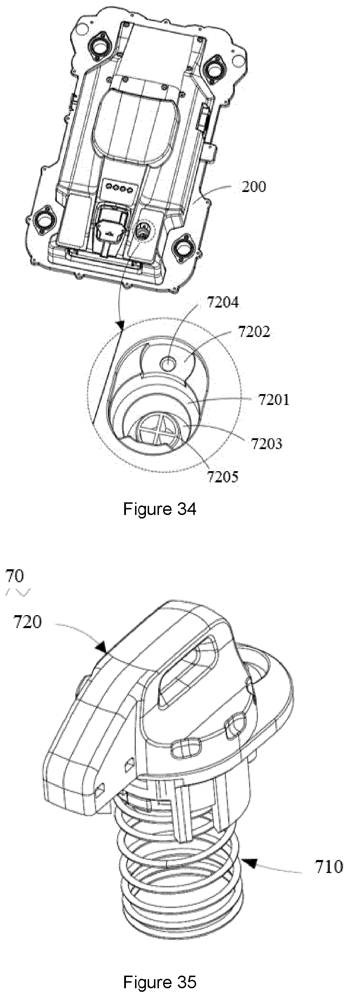

Please refer to FIG. 30, FIG. 32 through FIG. 38. The disabling device 70 is installed on the outer housing 200, which is used to control the mower 100 to be powered on or off, thereby ensuring that the mower 100 can work in a safe condition. The disabling device 70 includes a fixing assembly 710 and a knob assembly 720. Wherein, the fixing assembly 710 is installed in the outer housing 200, and the knob assembly 720 is connected with the fixing assembly 710 and can rotate relative to the fixing assembly 710 to be switched between different gears/positions to enable the mower 100 to be in different states.

The fixing assembly 710 includes a fixing base 711, an elastic component 713 and a connecting component 712 located between the fixing base 711 and the elastic component 713. The fixing base 711 includes a body part 7111 and a fixing part 7112 connected with the body part 7111. The fixing part 7112 is provided with a through fixing groove 71120. The outer housing 200 is provided with a first accommodating cavity 7201 for accommodating the body part 7111, a second accommodating cavity 7202 for accommodating the fixing part 7112, a third accommodating cavity 7203 for accommodating the elastic component 713 and the connecting component 712, and a fourth accommodating cavity 7204 corresponding to the fixing groove 71120. The first accommodating cavity 7201 and the third accommodating cavity 7203 are communicated with each other and are circular shaped. A diameter of the first accommodating cavity 7201 is greater than a diameter of the third accommodating cavity 7203.

A clamping post 7205 is protrudingly arranged in the third accommodating cavity 7203, and one end of the elastic component 713 is sleeved on the clamping post 7205. The fourth accommodating cavity 7204 is communicated with the second accommodating cavity 7202, so that when the fixing assembly 710 is assembled to the outer housing 200, the connecting component 712 and the elastic component 713 are both accommodated in the third accommodating cavity 7203. A first end of the elastic component 713 is sleeved on the clamping post 7205 and abuts against an inner side wall of the outer housing 200, and a second end of the elastic component 713 abuts against the connecting component 712. The body part 7111 of the fixing base 711 is accommodated in the first accommodating cavity 7201, and the fixing part 7112 is accommodated in the second accommodating cavity 7202, so that the fourth accommodating cavity 7204 is aligned with the fixing groove 71120. At this time, a screw 714 may be used to pass through the fixing groove 71120 and lock and fix the fourth accommodating cavity 7204 to achieve a fixed connection between the fixing base 711 and the outer housing 200.

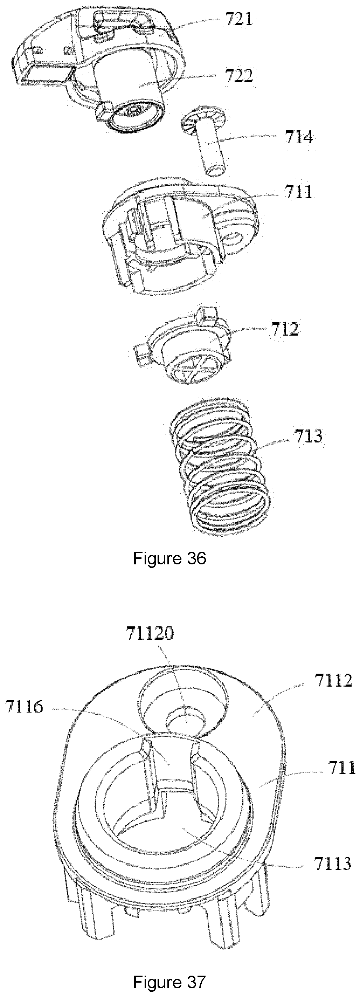

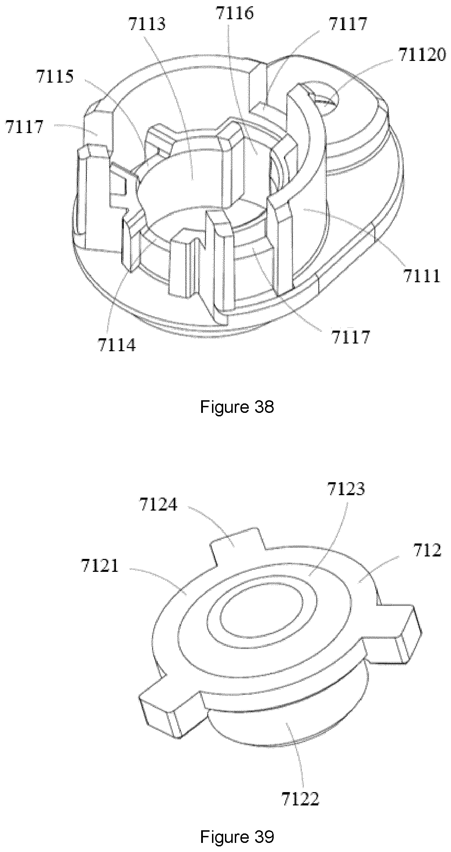

Please refer to FIG. 37 and FIG. 38. The body part 7111 is cylindrical and provided with a penetrating groove 7113 at a center. The body part 7111 is provided with a first groove 7114, a second groove 7115 and a third groove 7116 on a side facing the connecting component 712. The first groove 7114, the second groove 7115 and the third groove 7116 are all communicated with the penetrating groove 7113. In some embodiments, the first groove 7114 and the second groove 7115 are both concave grooves, the third groove 7116 is a through groove that passes through the body part 7111, the first groove 7114 and the third groove 7116 are arranged opposite to each other, and the second groove 7115 is located between the first groove 7114 and the third groove 7116.

Please refer to FIG. 39. The connecting component 712 is post-shaped, and includes a first connecting part 7121 and a second connecting part 7122 connected with the first connecting part 7121. The first connecting part 7121 is provided with a supporting part 7123 protruding toward the penetrating groove 7113, the second connecting part 7122 is arranged away from the supporting part 7123, a diameter of the second connecting part 7122 is less than a diameter of the first connecting part 7121, and the elastic component 713 is sleeved on an outer side of the second connecting part 7122 and abut against the first connecting part 7121. At this time, the elastic component 713 is fixed on the second connecting part 7122 and the clamping post 7205, and can be compressed and released between the second connecting part 7122 and the clamping post 7205. In some embodiments, the elastic component 713 is a spring.

The connecting component 712 further includes a third connecting part 7124 extending outward from an outer edge of the first connecting part 7121. The body part 7111 is further provided with an accommodating groove 7117 on a side facing the connecting component 712 for accommodating the third connecting part 7124. When the connecting component 712 and the fixing base 711 are assembled, the third connecting part 7124 is accommodated in the accommodating groove 7117. In this embodiment, there are three third connecting parts 7124 and three the accommodating grooves 7117 and they are evenly arranged with each other.

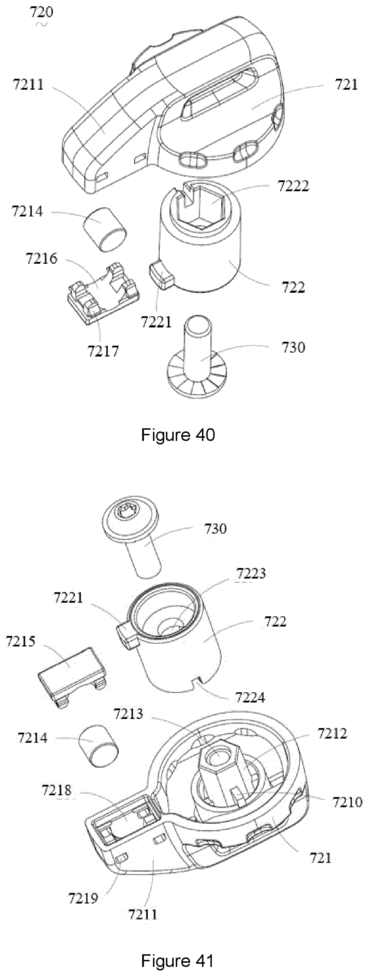

Please refer to FIG. 36, FIG. 40 and FIG. 41. The knob assembly 720 includes a knob handle 721 and a connecting rod 722 extending downward from a bottom of the knob handle 721. The knob handle 721 is provided with a protruding toggling part 7211, and an outer side wall of the connecting rod 722 is provided with a protruding part 7221. The connecting rod 722 is configured to pass through the penetrating groove 7113 and abut against the supporting part 7123 in the penetrating groove 7113, so as to push the connecting component 712 downward to compress the elastic component 713 and enable the elastic component 713 to rotate, so that the protruding part 7221 is respectively positioned in the first groove 7114, the second groove 7115 and the third groove 7116, and the knob assembly 720 is respectively in the start state, the close state and the release state.

The toggling part 7211 is configured to be capable of switched between the start state, the close state and the release state. When the toggling part 7211 is in the start state, the protruding part 7221 is accommodated in the first groove 7114. When the toggling part 7211 is in the close state, the protruding part 7221 is accommodated in the second groove 7115. When the toggling part 7211 is in the release state, the protruding part 7221 is accommodated in the third groove 7116. The elastic component 713 may be used to resist the connecting component 712 and the connecting rod 722 so that the protruding part 7221 is fixed in the corresponding first groove 7114, second groove 7115 or third groove 7116.

Specifically, the knob handle 721 is provided with a fixing post 7212 extending downward from a bottom of the knob handle 721, and the connecting rod 722 is post-shaped, sleeved on an outer side of the fixing post 7212, and fixed to the fixing post 7212 by a fastener 730. In this embodiment, the fixing post 7212 is hexagonal shaped, and an opening hole 7222 for accommodating the fixing post 7212 is correspondingly opened in the connecting rod 722. The opening hole7222 is also hexagonal shaped, so that when the fixing post 7212 is accommodated in the opening hole7222, the fixing post 7212 cannot rotate in the opening hole7222, thereby realizing a positioning between the connecting rod 722 and the knob handle 721, and then when the knob handle 721 is rotated, the connecting rod 722 can be driven to rotate synchronously.

A fixing hole 7213 is arranged in the fixing post 7212, and a perforation hole 7223 communicated with the fixing hole 7213 is arranged in the connecting rod 722 accordingly. The fastener 730 passes through the perforation hole 7223 and extends into the fixing hole 7213 to be locked and fixed with the fixing hole 7213, thereby achieving a fixed connection between the connecting rod 722 and the knob handle 721. In some embodiments, the fastener 730 is a screw, the fixing hole 7213 is a screw hole, and the perforation hole 7223 is a round hole. Of course, in other embodiments, the fastener 730 may also be a positioning pin, and at this time, the fixing hole 7213 is a positioning hole. Alternatively, the fastener 730 and the fixing hole 7213 are other structures matched with each other, as long as they can achieve a fixed connection between the connecting rod 722 and the knob handle 721, which is not limited here.

A positioning hole 7224 is arranged on a side of the connecting rod 722 away from the protruding part 7221, and correspondingly, a positioning block 7210 is arranged at a connecting position of the fixing post 7212 and the knob handle 721. Therefore, when assembling the connecting rod 722, the positioning block 7210 may be clamped in the positioning hole 7224 to achieve a pre-positioning of the connecting rod 722 and the knob handle 721, and then the connecting rod 722 may be fixed with the knob handle 721 through the fastener 730. Not only is a fixing operation simpler, but it can also ensure that the protruding part 7221 and the toggling part 7211 maintain a same direction. And then when the toggling part 7211 is subsequently rotated, a current position of the protruding part 7221 can be quickly known, and a current state of the mower 100 can be quickly determined.

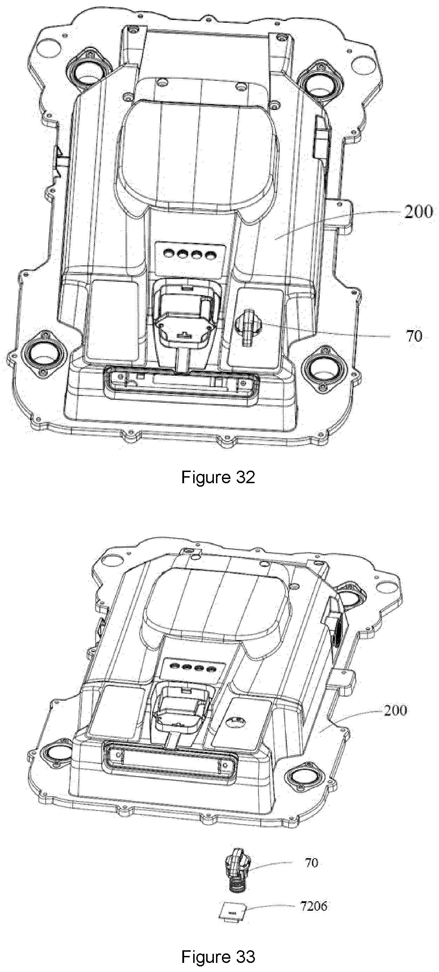

Please refer to FIG. 33. The outer housing 200 is provided with a switch 7206, a magnet 7214 and a limiting component 7215 for limiting and fixing the magnet 7214 are arranged in the toggling part 7211, and the magnet 7214 is used to cooperate with the switch 7206 to realize an on or off of the switch 7206, and then realize a power on or off of the mower 100. Specifically, when the toggling part 7211 is in the start state, the magnet 7214 approaches the switch 7206 to enable the switch 7206 to be electrically conductive, and when the toggling part 7211 is in the close state or the release state, the magnet 7214 moves away from the switch 7206 to enable the switch 7206 to be disconnected. In some embodiments, the switch 7206 is a reed switch. Of course, the switch 7206 may also be a Hall switch, which is not limited here.

A matching groove 7216 matched with the magnet 7214 is formed in the limiting component 7215. The limiting component 7215 is further provided with a clamping block 7217 clamped and matched with the toggling part 7211. The clamping block 7217 is spring-sheet shaped. The toggling part 7211 is correspondingly provided with a clamping groove 7218 and a clamping hole 7219. When installing the magnet 7214, the magnet 7214 is first clamped in the matching groove 7216, then the limiting component 7215 is pushed into the clamping groove 7218 and enable the clamping block 7217 to bounce out from the clamping hole 7219. At this time, the limiting component 7215 is fixedly connected with the toggling part 7211, and the magnet 7214 is also fixed.

When the disabling device 70 is used, taking the protruding part 7221 being accommodated in the first groove 7114 as an example, at this time, the magnet 7214 is close to the switch 7206, the switch 7206 is turned on, and the mower 100 is powered on. When the mower 100 needs to be turned off, the knob handle 721 is first pressed downward so that the connecting rod 722 pushes the connecting component 712 to move downward and compress the elastic component 713. At this time, the third connecting part 7124 slides downward along the accommodating groove 7117, and the protruding part 7221 is separated from the first groove 7114. Then, the knob handle 721 is rotated to enable the protruding part 7221 slide between the first groove 7114 and the second groove 7115 until the protruding part 7221 slides into the second groove 7115. Finally, a rotation of the knob handle 721 is stopped and a pressure on the knob handle 721 is released. At this time, the magnet 7214 is away from the switch 7206 and is in the close state, the switch 7206 is disconnected, and the mower 100 is powered off. Similarly, an operation of switching the protruding part 7221 between the second groove 7115 and the third groove 7116 is also achieved by first pressing the knob handle 721 and then rotating the knob handle 721, which will not be repeated here. Of course, alternatively, after pressing the knob handle 721, the knob handle 721 may be directly rotated in an opposite direction, so that the protruding part 7221 switches between the first groove 7114 and the third groove 7116 without passing through the second groove 7115.

When the knob assembly 720 rotates in the outer housing 200, the protruding part 7221 moves between the first groove 7114, the second groove 7115 and the third groove 7116. During a movement, the protruding part 7221 will first move to a plane between the two grooves. At this time, the elastic component 713 will be elastically deformed, and then bounce into the next groove to be rotated to. The elastic component 713 is released. During a compression and releasing process of the elastic component 713, an elastic deformation will be transmitted to a user's hand, so that the user may clearly understand a position of the disabling device 70. At the same time, the elastic component 713 can also effectively prevent the disabling device 70 from moving due to a vibration when the mower 100 is working.

In addition, it should be noted that, since the third groove 7116 in the disclosure is a through groove, when the protruding part 7221 is accommodated in the third groove 7116, the knob assembly 720 may be removed from the fixing assembly 710, so that the knob assembly 720 is separated from the fixing assembly 710, thereby realizing a disassembly of the knob assembly 720.

In summary, the disabling device 70 of the disclosure is provided with the first groove 7114, the second groove 7115 and the third groove 7116 on the fixing base 711, and the protruding part 7221 is arranged on an outer side wall of the connecting rod 722 at the bottom of the knob handle 721, so that the connecting rod 722 may pass through the penetrating groove 7113 and push the connecting component 712 downward to compress the elastic component 713, the protruding part 7221 may slide between the first groove 7114, the second groove 7115 and the third groove 7116, and then the knob handle 721 may be moved between the start state, the close state and the release state. An arrangement of the elastic component 713 enables the user to sense a current position of the knob handle 721 through the elastic deformation of the elastic component 713, and can also effectively prevent the disabling device 70 from moving due to the vibration when the mower 100 is working at the same time.

The disabling device of the disclosure is provided with the first groove, the second groove and the third groove on the fixing base, and the protruding part is arranged on an outer side wall of the connecting rod at the bottom of the knob handle, so that the connecting rod may pass through the penetrating groove and push the connecting component downward to compress the elastic component, the protruding part may slide between the first groove, the second groove and the third groove, and then the knob handle may be moved between the start state, the close state and the release state. The arrangement of the elastic component enables the user to sense the current position of the knob handle through the elastic deformation of the elastic component, which effectively solves the defect in the conventional art that the key does not provide obvious prompts during the gear switching process, and causes user operation errors.

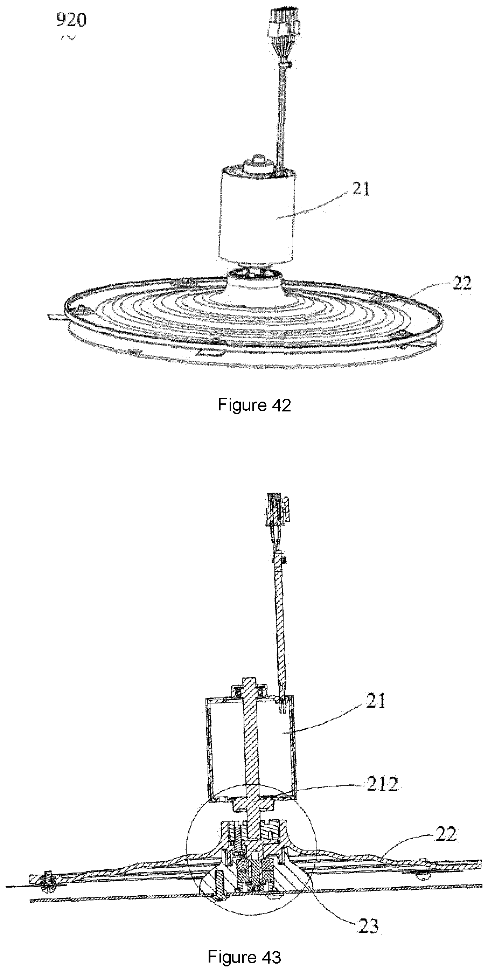

It should be noted that, robotic mowers have greatly facilitated lawn maintenance, however, while robotic mowers help to mow the lawn like most devices, they still require some care and maintenance and may incur some costs over their duration life. Especially for a motor driving shaft, the conventional motor driving shaft is set long enough to cooperate with the cutting disc, drives the cutting disc to rotate and then realizes a cutting action. However, after being used for a period of time, great wear will occur between the motor driving shaft and the cutting disc, which enables the motor driving shaft to be unable to continue to be used, and replacement cost of the motor driving shaft is very high. Therefore, the disclosure provides the cutting device, the cutting device can reduce maintenance costs after the wear occurs. Specifically, please refer to FIG. 42 through FIG. 45. The cutting device 920 mainly includes a driving assembly 21, a cutting assembly 22 and a plate assembly 23. The driving assembly 21 is used to drive the cutting assembly 22 to rotate to perform mowing, and the plate assembly 23 is used to protect the cutting assembly 22. In an embodiment, the driving assembly 21 includes a cutting motor 211, a driving shaft 212 extending from the cutting motor 211, and a driving component 213 assembled at a tail end of the driving shaft 212. The cutting assembly 22 includes a cutting disc 221, an extending shaft 222 accommodated in the cutting disc 221, and a knife blade 223 arranged on the cutting disc 221, and an accommodating groove 2211 and a perforation hole 2213 are arranged on a top of the cutting disc 221. The plate assembly 23 includes a flat plate 231 and a connecting cover 232 located between the cutting disc 221 and the flat plate 231, and the connecting cover 232 is fixedly connected with the flat plate 231. In this embodiment, the cutting motor 211 is preferably a driving motor, and the driving shaft 212 is preferably a motor shaft. The cutting disc 221 is disc-shaped, and five knife blades 223 are arranged and evenly distributed on an edge of the cutting disc 221.

The extending shaft 222 is configured such that the first end of the extending shaft 222 is accommodated in the accommodating groove 2211 and is fixedly connected with the cutting disc 221 and the driving component 213, and the second end of the extending shaft 222 passes through the perforation hole 2213, extends into the connecting cover 232 and is movably connected with the connecting cover 232. In some embodiments, the cutting disc 221, the extending shaft 222 and the driving component 213 are locked and fixed to each other by a locking component 230, and a central axis of the extending shaft 222 and a central axis of the driving shaft 212 are located in a same straight line, so that when the cutting motor 211 drives the driving shaft 212 to rotate, the driving component 213 drives the extending shaft 222 and the cutting disc 221 to rotate synchronously, the knife blade 223 performs the cutting action, and at this time the plate assembly 23 remains stationary. It may be seen that the cutting device 20 of the disclosure utilizes an independently arranged extending shaft 222 to realize a connection between the driving shaft 212 and the cutting disc 221, which can not only reduce manufacturing cost on a basis of realizing same functions, but also can directly replace the extending shaft 222 after the extending shaft 222 and the cutting disc 221 are severely worn, thereby reducing the maintenance costs.

A following description will describe in detail a connecting structure between the driving shaft 212, the cutting disc 221 and the extending shaft 222.

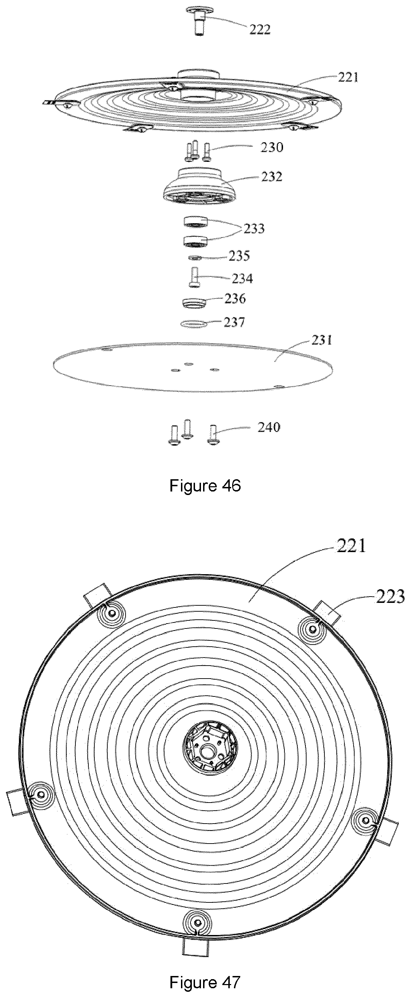

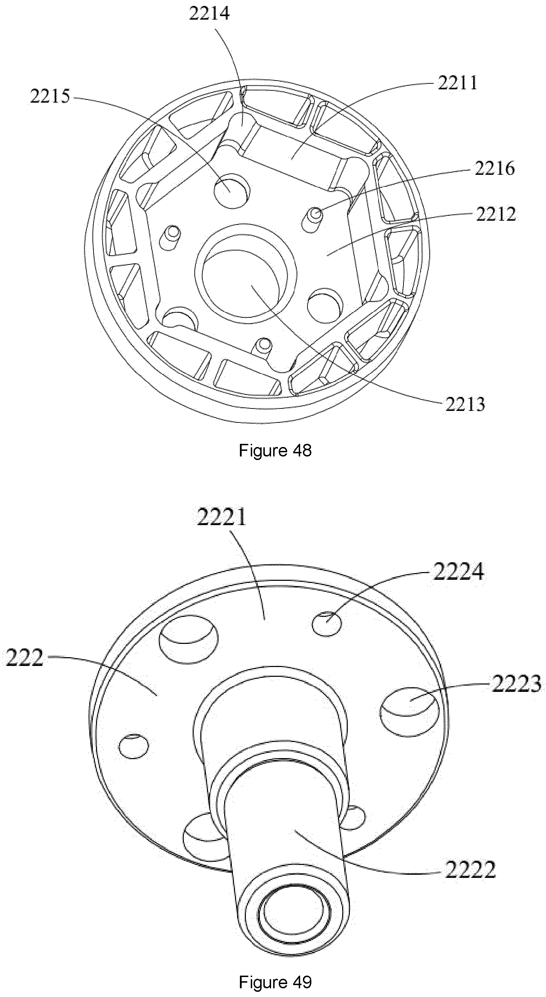

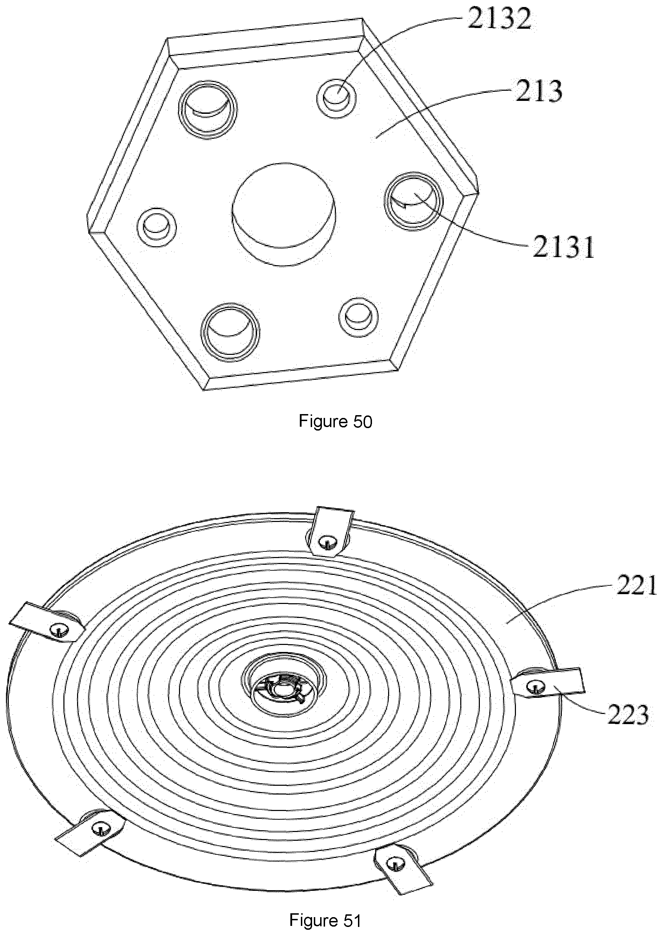

Please refer to FIG. 47 through FIG. 50. A top of the cutting disc 221 is provided with the accommodating groove 2211, a bottom wall 2212 located at a bottom of the accommodating groove 2211, and the perforation hole 2213 penetrating the bottom wall 2212. The extending shaft 222 is T-shaped. A first end of the extending shaft 222 is accommodated in the accommodating groove 2211 and a second end of the extending shaft 222 passes through the cutting disc 221 from the perforation hole 2213. The driving component 213 is accommodated in the accommodating groove 2211 and located on an upper surface of the extending shaft 222. In other words, an arrangement of the accommodating groove 2211 is to provide an accommodating space for the driving component 213 and the extending shaft 222, and to realize a connection between the driving assembly 10 and the cutting assembly 22 at the same time.

In order to ensure a connection stability between the driving component 213 and the cutting disc 221, the accommodating groove 2211 is provided with a hexagonal inner cavity, and an outer shape of the driving component 213 is also set in the hexagonal shape, so that when the driving component 213 and the cutting disc 221 are assembled and fixed, two hexagons can be used to fit and interfere with each other, the driving component 213 may be stably accommodated in the accommodating groove 2211, and then the cutting disc 221 can be driven to rotate synchronously.

In this embodiment, the driving component 213 is a hexagonal nut, and an angle is formed between two adjacent straight edges. In order to ensure that the driving component 213 can be easily assembled into the accommodating groove 2211, the disclosure rounds corners of the six straight edges forming the inner cavity of the accommodating groove 2211 to form six arc-shaped avoidance grooves 2214. In this way, when the hexagonal driving component 213 is assembled into the accommodating groove 2211, the six avoidance grooves 2214 may be used to avoid the six corners of the driving component 213 to avoid a problem of assembly difficulties.

Of course, in other embodiments, as long as the two can fit each other and interfere with each other to ensure that the driving component 213 can drive the cutting disc 221 to rotate synchronously, the inner cavity of the accommodating groove 2211 and the outer shape of the driving component 213 may also be set to other shapes, which is not limited here.

The extending shaft 222 includes the fixing part 2221 and an extending part 2222 arranged perpendicular to the fixing part 2221. The fixing part 2221 is accommodated in the accommodating groove 2211 and fits with the bottom wall 2212, and the extending part 2222 passes through the perforation hole 2213. In order to further reduce manufacturing and maintenance costs, the disclosure sets the fixing part 2221 of the extending shaft 222 to be circular, and a diameter of a circle is slightly smaller than a distance between the two straight sides of the inner cavity of the accommodating groove 2211, which ensures that the circular fixing part 2221 can be accommodated in the accommodating groove 2211.

Since the inner cavity of the accommodating groove 2211 is hexagonal and the fixing part 2221 is circular, there is no mutual cooperation or interference between the inner cavity of the accommodating groove 2211 and the fixing part 2221. Therefore, in order to ensure the connection stability between the extending shaft 222 and the driving component 213 and between the extending shaft 222 and the cutting disc 221, a first locking hole 2215 is opened on the bottom wall 2212, and a second locking hole 2223 is correspondingly opened on the fixing part 2221. A third locking hole 2131 is also correspondingly opened on the driving component 213. The first locking hole 2215, the second locking hole 2223 and the third locking hole 2131 are aligned with each other, so that the cutting disc 221, the extending shaft 222 and the driving component 213 may be locked and fixed by using the locking component 230 to pass through the first locking hole 2215, the second locking hole 2223 and the third locking hole 2131 from bottom to top in sequence. In some embodiments, the locking component 230 is a locking screw.

In addition, since the fixing part 2221 is circular in shape, it is easy to rotate, which may cause the first locking hole 2215, the second locking hole 2223 and the third locking hole 2131 to be unable to be accurately aligned. Therefore, the disclosure further provides a positioning post 2216 on the bottom wall 2212 that protrudes toward an inside of the accommodating groove 2211, and an opening groove 2224 is correspondingly arranged on the fixing part 2221, so that the positioning post 2216 may be used to pass through the opening groove 2224 to position the fixing part 2221 in the accommodating groove 2211. Correspondingly, the driving component 213 is also provided with a corresponding blind hole 2132 for accommodating the positioning post 2216, so that at this time, the cutting disc 221, the extending shaft 222 and the driving component 213 may be positioned relative to each other. In this embodiment, there are three first locking holes 2215 evenly distributed on the bottom wall 2212, and there are three positioning posts distributed between two adjacent first locking holes 2215, so that the fixing part 2221 can be stably attached to the bottom wall 2212.

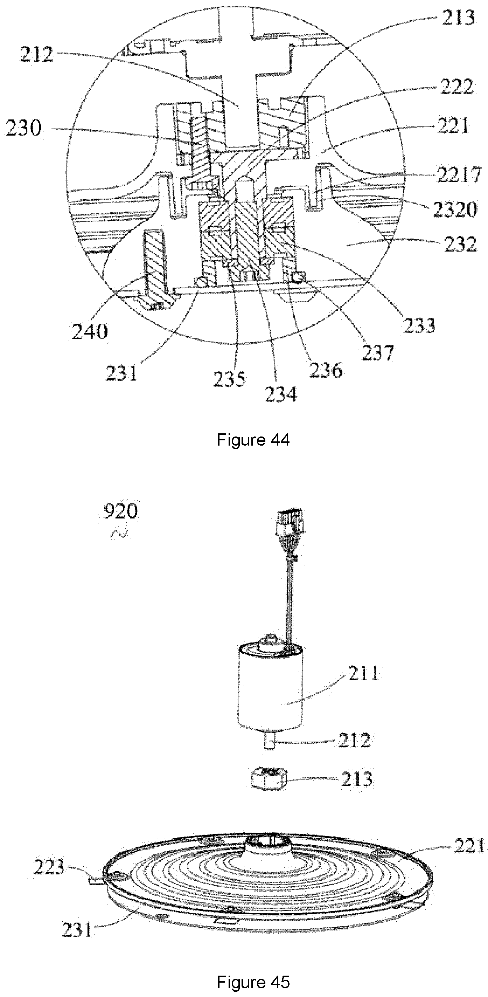

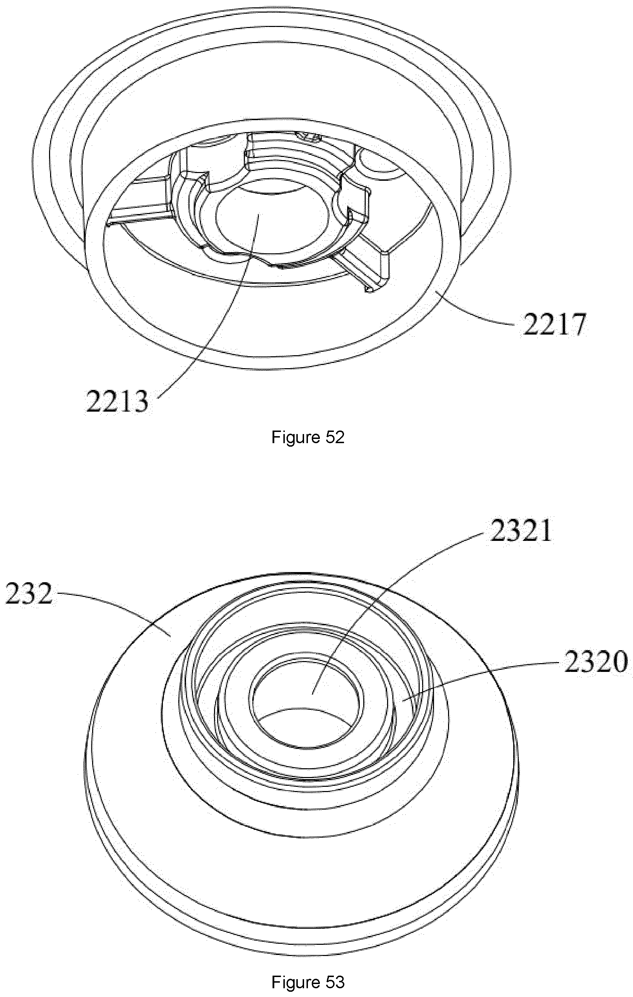

Please refer to FIG. 44 through FIG. 54. The flat plate 231 is used to protect the cutting disc 221 and the knife blade 223. A bottom of the cutting disc 221 is provided with a protruding ring 2217 protruding downward, and the connecting cover 232 is provided with a through hole 2321 located at a top and a concave groove 2320 surrounding the through hole 2321. The through hole 2321 is coaxially arranged with the perforation hole 2213. When the connecting cover 232 is assembled to a bottom of the cutting disc 221, the extending shaft 222 passes through the through hole 2321, the protruding ring 2217 is accommodated in the concave groove 2320, and there is no other interference or fixed connection relationship between the protruding ring 2217 and the concave groove 2320. Therefore, when the cutting disc 221 rotates, the connecting cover 232 will not be driven to rotate.

The connecting cover 232 is further provided with an accommodating passage 2322 communicated with the through hole 2321 and is coaxially arranged with the through hole 2321. A diameter of the accommodating passage 2322 is larger than a diameter of the through hole 2321. A ball bearing 233 is accommodated in the accommodating passage 2322. An outer ring of the ball bearing 233 is in contact with an inner wall surface of the accommodating passage 2322. The extending shaft 222 passes through the ball bearing 233 and is fixed to an inner ring of the ball bearing 233. Therefore, when the extending shaft 222 drives the inner ring of the ball bearing 233 to rotate synchronously, the connecting cover 232 remains stationary. In this embodiment, there are two ball bearings 233 and are arranged in an up-down manner on an outer side of the extending shaft 222 to flexibly connect the extending shaft 222 with the connecting cover 232. Wherein, the upper ball bearing 233 abuts against an upper surface of the accommodating passage 2322, and a lower surface of the lower ball bearing 233 is roughly flush with a lower surface of the extending shaft 222. Of course, a lower surface of the extending shaft 222 may also be slightly higher than the lower surface of the lower ball bearing 233, which is not limited here.

Please refer to FIG. 44 through FIG. 54. The plate assembly 23 further includes a fixing component 234, a first washer 235 installed on the fixing component 234, a second washer 236 accommodated in the accommodating passage 2322 and located at a bottom, and a sealing ring 237 sealingly connecting the second washer 236 with the connecting cover 232. Wherein, the fixing component 234 is configured to be inserted into the extending shaft 222 from a bottom of the extending shaft 222 and fixed, and the first washer 235 is clamped and fixed between the ball bearing 233 and the fixing component 234, so that the extending shaft 222, the ball bearing 233 and the connecting cover 232 are relatively fixed. In some embodiments, a diameter of the first washer 235 is greater than or equal to an outer diameter of the inner ring of the ball bearing 233, so that the first washer 235 may be used to assist in supporting the extending shaft 233 and the inner ring of the ball bearing 233. The fixing component 234 is a fixing screw and is fixed to an inner cavity thread of the extending shaft 222.

The second washer 236 is accommodated at a bottom of the accommodating passage 2322, and the sealing ring 237 is accommodated in a limiting groove 2323 located below the accommodating passage 2322. An inner diameter of the limiting groove 2323 is larger than an outer diameter of the accommodating passage 2322, so that the second washer 236 and the sealing ring 237 may be fixed respectively by a mutual extrusion between the second washer 236 and the sealing ring 237, and at the same time, it can also support the outer ring of the ball bearing 233, as well as play a role of waterproof and moisture-proof at the same time.

The flat plate 231 and the connecting cover 232 are connected through self-tapping screws 240, and a number of the self-tapping screws 240 is preferably 3, but should not be limited thereto.

A working principle of the cutting device 20 is as follows: when the cutting motor 211 drives the driving shaft 212 to rotate, the driving component 213 rotates synchronously. At the same time, the driving component 213 drives the extending shaft 222 and the cutting disc 221 to rotate synchronously, the inner ring of the ball bearing 233 rotates synchronously and the outer ring of the ball bearing 233 remains stationary, so the connecting cover 232 and the flat plate 231 remain stationary. At this time, a rotation of the cutting disc 221 may be used to drive the knife blade 223 to rotate synchronously to achieve mowing.

In summary, the cutting device 20 of the disclosure is provided with the driving component 213 at a tail end of the driving shaft 212 and the extending shaft 222 in the cutting disc 221. At the same time, the extending shaft 222 is configured that a first end of the extending shaft 222 is fixedly connected with the cutting disc 221 and the driving component 213 through the locking component 230, and a second end of the extending shaft 222 extends into the connecting cover 232 and is movably connected to the connecting cover 232. Therefore, when the cutting motor 211 drives the driving shaft 212 to rotate, the extending shaft 222 and the cutting disc 221 can be driven to rotate synchronously through the driving component 213, so that the knife blade 223 performs a cutting action, while the plate assembly 23 remains stationary. In addition, since the driving shaft 212 is assembled and fixed with the extending shaft 222 and the cutting disc 221 through the driving component 213, when the wear occurs, the extending shaft 222 and the driving component 213 may be directly replaced without replacing the driving shaft 212, thereby reducing the maintenance costs.

The cutting device of the disclosure is provided with the driving component at the tail end of the driving shaft and the extending shaft in the cutting disc. At the same time, the extending shaft is configured that the first end of the extending shaft is fixedly connected with the cutting disc and the driving component 213, and the second end of the extending shaft 222 extends into the connecting cover and is movably connected to the connecting cover. Therefore, when the driving motor drives the driving shaft to rotate, the extending shaft and the cutting disc can be driven to rotate synchronously through the driving component, so that the knife blade performs the cutting action, while the plate assembly remains stationary. Since the driving shaft is assembled and fixed with the extending shaft and the cutting disc through the driving component, when the wear occurs, the extending shaft and the driving component may be directly replaced without replacing the driving shaft, thereby reducing the maintenance costs.

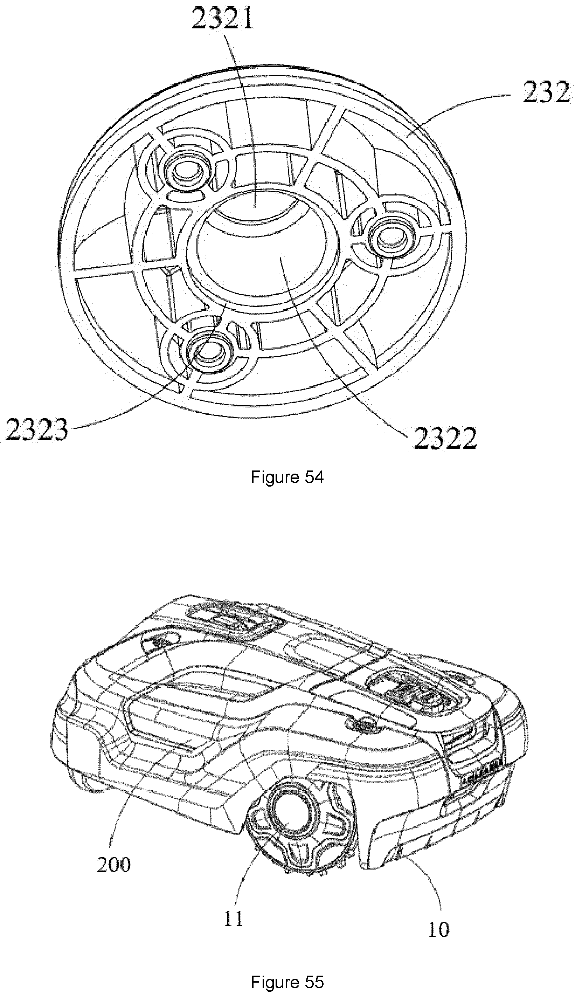

It should be noted that, a connection method between a hub motor and a housing of the conventional mower is usually that a connecting hole is opened on the housing, a thread is arranged on a connecting shaft of the hub motor, and a nut is arranged in the housing at the same time, so that the connecting shaft passes through the connecting hole and is threadedly connected with the nut in the housing, thereby improving a connection stability between the hub motor and the housing. However, this connection method enables a sealing between the connecting shaft and the housing to be poor. At the same time, since the connecting shaft is directly connected with the housing, the connection is easily damaged during use, which enables the connection stability between the hub motor and the housing to be poor. Therefore, the disclosure provides the mower to solve a problem of poor sealing and poor stability between the hub motor and the housing in the conventional art. In an embodiment, please refer to FIG. 55. The mower 100 includes the outer housing 200, the chassis 10, the cutting assembly, the walking assembly 11 and an installation assembly 83. Wherein, the outer housing 200 is matched with the chassis 10 to form the accommodating space for accommodating the cutting assembly between the outer housing 200 and the chassis 10. The cutting assembly is used to mow the lawn to maintain the lawn. The walking assembly 11 is connected with the chassis 10 and contacts the ground, so that the mower 100 moves under a driving of the walking assembly 11 to trim and mow. The installation assembly 83 is used to connect the walking assembly 11 with the chassis 10 to improve a connection stability between the walking assembly 11 and the chassis 10.

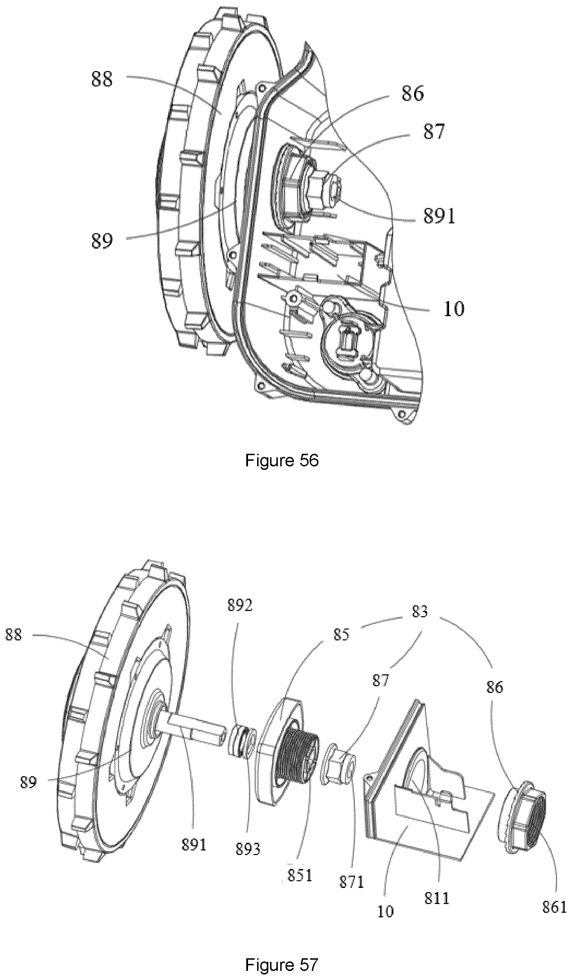

Please refer to FIG. 56. The walking assembly 11 includes a tire 88 and a wheel hub 89. The tire 88 is sleeved on an outer side of the wheel hub 89 and is clamped with the wheel hub 89, so that the wheel hub 89 can drive the tire 88 to rotate. At the same time, the wheel hub 89 contacts the ground through the tire 88, which reduces a wear of the wheel hub 89 and increases a duration life of the wheel hub 89. In some embodiments, the wheel hub 89 is a hub motor. A specific structure of the hub motor may be arranged according to the conventional art and will not be described in detail here.

In this embodiment, there are two walking assemblies 11 and two installation assemblies 83. The two walking assemblies 11 and the two installation assemblies 83 are respectively arranged on two sides of one end of the chassis 10 away from a forward direction of the mower 100 to realize a rear driving of the mower 100. Of course, in other embodiments, there may also be one walking assembly 11 and one installation assembly 83, or there may also be three walking assemblies 11 and three installation assemblies 83, as long as the mower 100 can be driven. Here, there is no restriction on arrangement positions of the walking assemblies 11 and the installation assemblies 83.

Please refer to FIG. 56 and FIG. 57. The wheel hub 89 includes a connecting shaft 891, a through hole 811 is arranged on a side wall of the chassis 10, and the installation assembly 83 includes a first installation component 85, a locking component 87 and a second installation component 86. The first installation component 85 is sleeved on an outer side of the connecting shaft 891, and the first installation component 85 includes a connecting part 852 and an assembling part 853. The connecting part 852 is used to pass through the through hole 811 and partially extend into the chassis 10. The locking component 87 is used to lock and fix with a tail end of the connecting shaft 891 to limit the first installation component 85 between the walking assembly 11 and the locking component 87. The assembling part 853 is arranged at one end of the connecting part 852 and is placed on the outer side of the chassis 10. The second installation component 86 is arranged in the chassis 10 and is fixedly connected with the connecting part 852. The second installation component 86 includes a reinforcing part 863. When the connecting part 852 passes through the through hole 811 and is fixedly connected with the second installation component 86, the assembling part 853 and the reinforcing part 863 are respectively located on two sides of the through hole 811 and squeeze side walls of the chassis 10 against each other to achieve a fixed connection between the walking assembly 11 and the chassis 10.

In an embodiment, the wheel hub 89 is circular shaped, and the connecting shaft 891 is arranged at an axis of the wheel hub 89, so that the wheel hub 89 can rotate around the connecting shaft 891 to push the mower 100 to move forward. The first installation component 85 is limitedly connected with the connecting shaft 891 to prevent the first installation component 85 from falling off the connecting shaft 891 during use. The through hole 811 is arranged on the side wall of the chassis 10 and passes through the chassis 10. Part of the connecting part 852 passes through the through hole 811, and the assembling part 853 abuts against the outer side wall of the chassis 10. The second installation component 86 is placed in the accommodating space and connected with the connecting part 852 extending into the accommodating space. The reinforcing part 863 extends outward from the second installation component 86, so that when the second installation component 86 and the connecting part 852 are locked, the reinforcing part 863 can abut against the side wall of the chassis 10.

Please refer to FIG. 57 through FIG. 62. A limiting block 8913 is arranged on the connecting shaft 891, and the first installation component 85 is provided with a first installation hole 851. The connecting shaft 891 passes through the first installation hole 851 and is connected with the locking component 87 to limit the first installation component 85 between the locking component 87 and the limiting block 8913. In an embodiment, the locking component 87 is threadedly connected with the connecting shaft 891, and the connecting shaft 891 extends outward from one side of the wheel hub 89. The extended part of the connecting shaft 891 is provided with a locking section 8911 and a limiting section 8912, and the locking section 8911 is arranged at an end of the connecting shaft 891 away from the wheel hub 89. The limiting block 8913 is arranged on a side of the limiting section 8912 close to the wheel hub 89. A size of the first installation hole 851 matches a size of the limiting section 8912 of the connecting shaft 891, so that the first installation component 85 can be sleeved on an outer side of the limiting section 8912 through the first installation hole 851.

**A** locking hole 871 is arranged on the locking component 87, and a size of the locking hole 871 matches the size of the locking section 8911. A thread is arranged in the locking hole 871, and a thread is also arranged on an outer side wall of the locking section 8911 to realize a threaded connection between the locking component 87 and the connecting shaft 891. An end of the first installation component 85 away from the connecting part 852 can abut against the limiting block 8913, and an tail end of the connecting part 852 can abut against the locking component 87 to limit the first installation component 85 between the limiting block 8913 and the locking component 87, and squeeze the first installation component 85 through the locking component 87 and the limiting block 8913 to limit and fix the first installation component 85 on the connecting shaft 891, so as to prevent the first installation component 85 from slipping off the connecting shaft 891 during use. In some embodiments, the locking component 87 is a nut, and the connecting shaft 891 is a stud with a thread on one end.

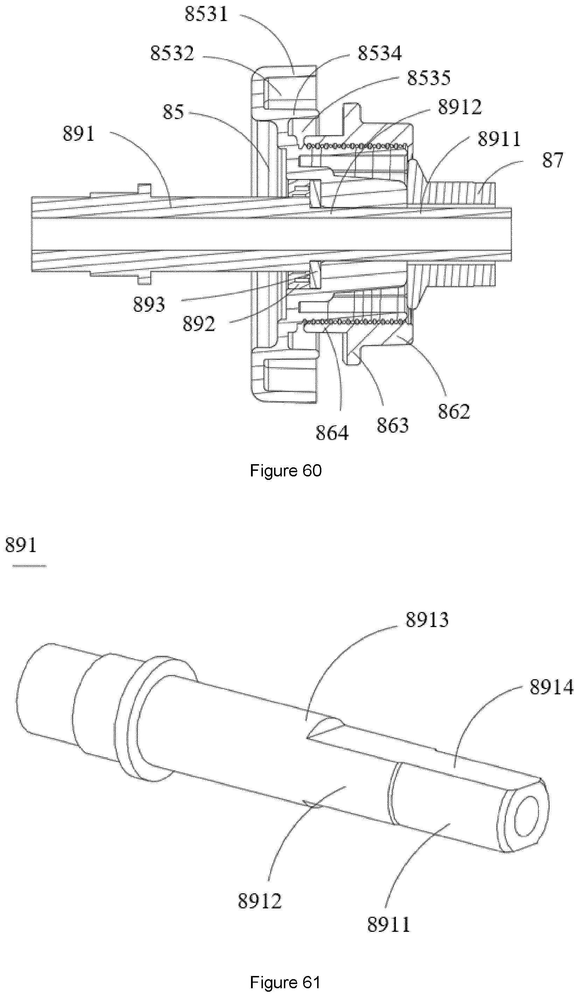

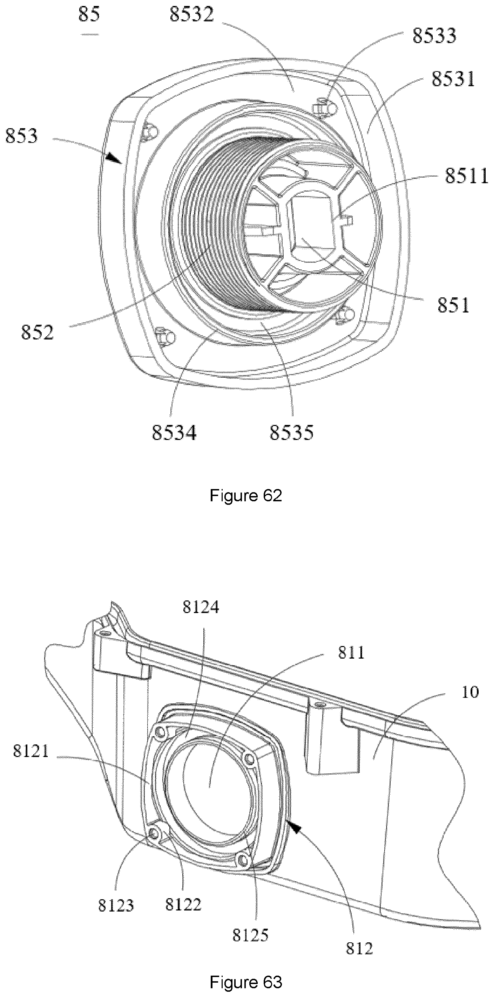

Please refer to FIG. 61 and FIG. 62. The connecting shaft 891 is further provided with a limiting surface 8914, and the first installation hole 851 is provided with a limiting wall 8511. After the connecting shaft 891 passes through the first installation hole 851, the limiting wall 8511 abuts against the limiting surface 8914, so that the first installation component 85 and the connecting shaft 891 remain relatively stationary. In an embodiment, a size of the connecting shaft 891 matches the size of the first installation hole 851. The connecting shaft 891 is cylindrical, and two relative limiting surfaces 8914 are arranged on the connecting shaft 891, so that a cross-section of the connecting shaft 891 cannot form a complete circle. The first installation hole 851 is circular, and two relative limiting walls 8511 are arranged on the first installation hole 851, so that a cross-section of the first installation hole 851 cannot form a complete circle. This arrangement ensures that the first installation component 85 will not be unable to rotate corresponding to the connecting shaft 891, thereby enabling the first installation component 85 to be kept relatively still to the connecting shaft 891. Of course, in other embodiments, the connecting shaft 891 may be in a square, polygonal or other shape, and the corresponding first installation hole 851 may also be set to the square, polygonal or other shape. There may also be other numbers of the limiting surface 8914 and the limiting wall 8511, such as one, three, etc., which is not limited here.

In this embodiment, the connecting shaft 891 is threadedly connected with the locking component 87 to fix the first installation component 85 on the connecting shaft 891. Of course, in other embodiments, the first installation component 85 may also be fixed to the connecting shaft 891 through other connection methods, such as buckle connection, glue connection, etc., which is not limited here.

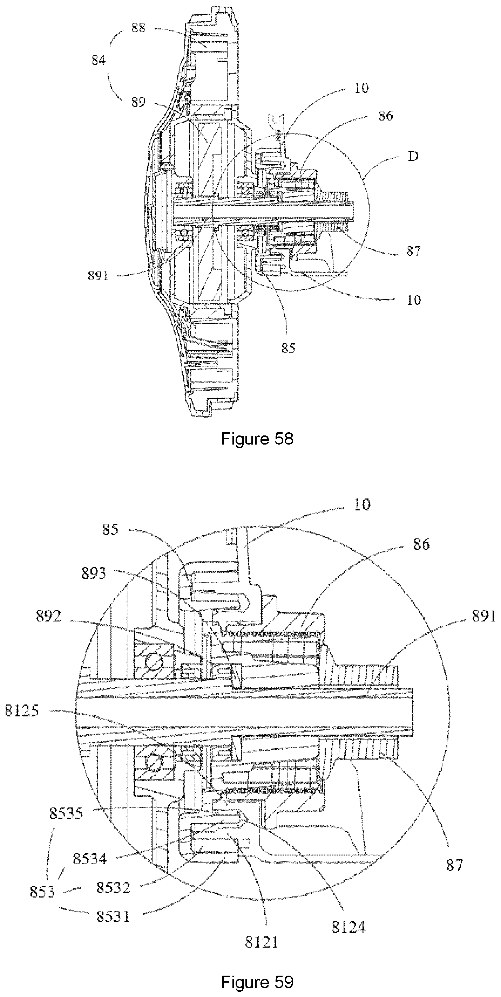

Please refer to FIG. 57 and FIG. 59. The walking assembly 11 further includes a gasket 893, and the gasket 893 is sleeved on the outer side of the connecting shaft 891 and located between the limiting block 8913 and the first installation component 85. In an embodiment, the connecting shaft 891 is made of metal, the first installation component 85 is made of plastic, and the gasket 893 is a circular rubber pad or a circular metal sheet, so that an edge of the first installation component 85 will not directly contact the connecting shaft 891, thereby avoiding a wear between the connecting shaft 891 and the first installation component 85 and extending a duration life of the first installation component 85.

In addition, the wheel hub 89 is further provided with a sealing gasket 892, and the sealing gasket 892 is sleeved on an outer side of the limiting block 8913 and arranged adjacent to the gasket 893. A sealing groove is further arranged at an end of the first installation component 85 away from the connecting part 852. A diameter of the sealing groove is larger than a maximum diameter of the limiting block 8913. The sealing groove is coaxially arranged with the first installation hole 851. The sealing gasket 892 is arranged between the connecting shaft 891 and the first installation component 85 and is arranged in the sealing groove to seal a gap between the connecting shaft 891 and the first installation component 85 to prevent dust, water vapor, etc. from entering the gap, thereby improving a sealing and waterproof effect between the connecting shaft 891 and the first installation component 85.

Please refer to FIG. 57, FIG. 62 and FIG. 63. The assembling part 853 is fixedly connected with the connecting part 852 and is arranged at one end of the connecting part 852 close to the walking assembly 11. The chassis 10 is provided with a positioning structure 812, and the positioning structure 812 is arranged on an outer side wall of the chassis 10 and surrounds the through hole 811. The assembling part 853 is matched with the positioning structure 812 to realize a connection and positioning between the first installation part and the chassis 10. In an embodiment, the assembling part 853 includes a cover board 8531, and the cover board 8531 extends from the assembling part 853 toward the connecting part 852. The cover board 8531 is located at an outermost side of the assembling part 853 and is ring-shaped. When the assembling part 853 is connected with the positioning structure 812, the cover board 8531 is covered on an outer side of the positioning structure 812 to cover the positioning structure 812. On one hand, it prevents the positioning structure 812 from being damaged by external objects, and on the other hand, it improves an aesthetics of the connection.

The assembling part 853 includes an assembling groove 8532 and a positioning component 8533 arranged in the assembling groove 8532, the positioning structure 812 includes a positioning plate 8121 and a positioning post 8122, the positioning plate 8121 is accommodated in the assembling groove 8532, and the positioning component 8533 is connected with the positioning post 8122. In an embodiment, four positioning components 8533 are arranged in the assembling groove 8532 and are respectively arranged at four top corners of the assembling part 853. The positioning components 8533 extend from a bottom of the assembling groove 8532 toward an inside of the assembling groove 8532 to form a cylindrical positioning component 8533. The positioning plate 8121 extends from an outer side wall of the chassis 10 toward a direction away from the chassis 10, the positioning post 8122 is integrally arranged with the positioning plate 8121, and an arrangement position of the positioning post 8122 on the positioning structure 812 corresponds to the positioning component 8533, so that the positioning component 8533 can be connected with the positioning post 8122. Wherein a positioning hole 8123 is arranged at one end of the positioning post 8122 away from the chassis 10, and the positioning hole 8123 matches a shape and size of the positioning component 8533, so that the positioning component 8533 can extend into the positioning hole 8123 to realize a positioning connection between the positioning post 8122 and the positioning post 8122. When the positioning component 8533 is positioned and connected with the positioning post 8122, the positioning plate 8121 extends into the assembling groove 8532 and the cover board 8531 is placed on an outer side of the positioning plate 8121 and contacts the positioning plate 8121, so as to cover the positioning structure 812.

In this embodiment, there are four positioning components 8533, and they are arranged at the four top corners of the assembling part 853. There are four corresponding positioning posts 8122, which are respectively arranged at four top corners of the positioning plate 8121, so as to match the positioning components 8533. Of course, in other embodiments, the positioning components 8533 may be arranged at other positions of the assembling part 853, and the positioning posts 8122 may be arranged at other positions of the positioning plate 8121 correspondingly. The positioning components 8533 and the positioning posts 8122 may also be set to other numbers, which is not limited here.

The first installation component 85 further includes a sealing component (not shown), and the sealing component is arranged at a bottom of the assembling groove 8532. When the assembling part 853 and the positioning structure 812 are assembled, an end of the positioning plate 8121 away from the chassis 10 extends into the assembling groove 8532 and abuts against the sealing component, and the sealing component is deformed to achieve a sealing connection between the positioning plate 8121 and the assembling part 853. In some embodiments, the sealing component is an O-shaped ring made of rubber.

The assembling part 853 further includes a concave groove 8535 and a separating board 8534 separating the concave groove 8535 from the assembling groove 8532, the positioning structure 812 further includes a protruding bar 8125 and an accommodating groove 8124 arranged between the protruding bar 8125 and the positioning plate 8121, the separating board 8534 is accommodated in the accommodating groove 8124, and the protruding bar 8125 is accommodated in the concave groove 8535. In an embodiment, an extending direction of the separating board 8534 is the same as an extending direction of the cover board 8531, and a concave direction of the concave groove 8535 is the same as a concave direction of the assembling groove 8532. The concave groove 8535 is arranged on a side of the accommodating groove 8124 close to the connecting part 852, and the concave groove 8535 is arranged between the separating board 8534 and the connecting part 852. The extending direction of the protruding bar 8125 is the same as an extending direction of the positioning plate 8121, and the two sides of the protruding bar 8125 are respectively provided with the through hole 811 and the accommodating groove 8124. When the installation assembly 83 is connected with the chassis 10, the connecting part 852 is accommodated in the through hole 811, the positioning plate 8121 and the positioning post 8122 are accommodated in the assembling groove 8532, and the positioning component 8533 is positioned and connected with the positioning post 8122. The separating board 8534 is accommodated in the accommodating groove 8124, and the protruding bar 8125 is accommodated in the concave groove 8535, so as to realize a clamping connection between the first installation part and the chassis 10.

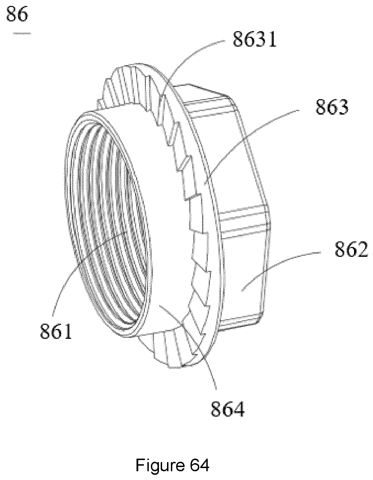

Please refer to FIG. 56, FIG. 57, FIG. 59 and FIG. 64. The second installation component 86 is sleeved on an outer side of the connecting part 852 and includes a second installation hole 861 for accommodating the connecting part 852. An outer side wall of the connecting part 852 is provided with an external thread, and an inner side wall of the second installation hole 861 is correspondingly provided with an internal thread, so that the connecting part 852 extends into the second installation hole 861 and is threadedly connected with the second installation component 86. The reinforcing part 863 is arranged at a middle position of the second installation component 86. In an embodiment, a shape and size of the connecting part 852 match the second installation hole 861, and an external thread arranged on the connecting part 852 corresponds to an internal thread arranged in the second installation hole 861, so that the connecting part 852 is accommodated in the second installation hole 861 and threadedly connected with the second mounting hole 861, so as to limit the side wall of the chassis 10 between the reinforcing part 863 and the assembling part 853, thereby improving a connection stability between the installation assembly 83 and the chassis 10.

The second installation component 86 includes a locking part 862 and an embedding part 864. Wherein, the locking part 862 and the embedding part 864 are coaxially arranged and are respectively arranged at two ends of the second installation component 86. The reinforcing part 863 is arranged at a connection between the locking part 862 and the embedding part 864 and protrudes outward from an outer surface of the second installation component 86. A shape and size of the embedding part 864 match the through hole 811, and a shape and size of the second installation hole 861 match the connecting part 852, so that the connecting part 852 extends from the outer side of the chassis 10 through penetrating the through hole 811, enters an interior of the chassis 10 and is connected with the second installation component 86. The embedding part 864 is sleeved on an outer side of the connecting part 852 and an end of the embedding part 864 away from the locking part 862 extends into the through hole 811 and is placed in the concave groove 8535, thereby improving the connection stability between the installation assembly 83 and the chassis 10. The locking part 862 is configured in an external hexagonal shape, so that an external tool may be used to abut against the locking part 862 to achieve a locking connection between the second installation component 86 and the first installation component 85.

A side of the reinforcing part 863 close to the embedding part 864 is further provided with a plurality of saw teeth 8631 protruding toward the side wall of the chassis 10 so as to engage with the side wall of the chassis 10. The plurality of saw teeth 8631 is evenly arranged on the reinforcing part 863. During assembly, an external force is used to drive the second installation component 86 to rotate, and the saw teeth 8631 are drive to abut against the inner side wall of the chassis 10 and slide relative to the inner side wall. When the external force disappears, an engagement between the saw teeth 8631 and the inner side wall of the chassis 10 increases an engagement force of the second installation component 86, thereby preventing the second installation component 86 from loosening or falling off during a long-term use. Of course, in other embodiments, a gear rack corresponding to the saw teeth 8631 may be arranged on the inner side wall of the chassis 10 so that the saw teeth 8631 are meshed with the gear rack, thereby further increasing the engagement force between the second installation component 86 and the chassis 10 to prevent falling off.

Through arranging the installation assembly 83 on the mower 100, the walking assembly 11 can be detachably connected with the chassis 10 through the installation assembly 83, so that when the walking assembly 11 is damaged, it can be disassembled and replaced.

In summary, the mower of the disclosure first locks and fixes the first installation component 85 and the walking assembly 11 through the locking component 87, so that the walking assembly 11, the first installation component 85 and the locking component 87 form a whole. Then the first installation component 85 passes through the through hole 811 and is locked with the second installation component 86, so that the side wall of the chassis 10 is limited between the first installation component 85 and the second installation component 86, thereby increasing an installation surface between the walking assembly 11 and the chassis 10 and improving a connection stability between the walking assembly 11 and the chassis 10. At the same time, the connecting shaft 891 is connected with the chassis 10 through the first installation component 85 and the second installation component 86, thereby increasing the sealing performance between the walking assembly 11 and the chassis 10. The walking assembly 11 is connected with the chassis 10 through the installation assembly 83, which facilitates a disassembly or replacement of the walking assembly 11. The first installation component 85 is positioned and connected with the chassis 10 through a matching of the assembling part 853 and the positioning structure 812, thereby improving a sealing effect between the first installation component 85 and the chassis 10. Through arranging the gasket 893 and the sealing gasket 892 on the wheel hub 89, the first installation component 85 is not in a direct contact with the connecting shaft 891, thereby avoiding a wear between the first installation component 85 and the connecting shaft 891 and improving a duration life of the first installation component 85.

The mower of the disclosure first locks and fixes the first installation component and the driving assembly through the locking component, so that the driving assembly, the first installation component and the locking component form a whole. Then the first installation component passes through the through hole and is locked and connected with the second installation component, so that the side wall of the chassis is limited between the first installation component and the second installation component, thereby increasing an installation surface between the driving assembly and the chassis and improving a connection stability between the driving assembly and the chassis. At the same time, the connecting shaft is connected with the chassis through the first installation component and the second installation component, thereby increasing the sealing performance between the driving assembly and the chassis.

The above description is only a preferred embodiment of the disclosure and an explanation of the technical principle used. Those skilled in the art should understand that a disclosure scope involved in this disclosure is not limited to the technical solutions formed by the specific combination of the above technical features. At the same time, it should also cover other technical solutions formed by any combination of the above technical features or their equivalent features without departing from a concept of the disclosure, such as a technical solution formed by replacing the above-mentioned features with technical features with similar functions disclosed in (but not limited to) this disclosure.

Except for the technical features described in the specification, the remaining technical features are known to those skilled in the art, in order to highlight the innovative features of the disclosure, the remaining technical features will not be repeated herein.

## Claims

1. A disabling device, comprising:
a fixing assembly, the fixing assembly including a fixing base, the fixing base provided with a penetrating groove, a first groove, a second groove and a third groove, and the first groove, the second groove and the third groove all communicated with the penetrating groove;
an elastic component;
a connecting component, the connecting component located between the fixing base and the elastic component; and
a knob assembly, the knob assembly including a knob handle and a connecting rod, the knob handle provided with a protruding toggling part, the connecting rod extending downward from a bottom of the knob handle, and a protruding part arranged on an outer side wall of the connecting rod;
wherein, the connecting rod is configured to pass through the penetrating groove and push the connecting component to compress the elastic component downward and rotate, when the protruding part is respectively positioned in the first groove, the second groove and the third groove, and the knob assembly is respectively in a start state, a close state and a release state.

2. The disabling device according to claim 1, wherein, the first groove and the second groove are both concave grooves, the third groove is a through groove that penetrates the fixing base, and when the protruding part is accommodated in the third groove, the knob assembly is detachable from the fixing assembly.

3. The disabling device according to claim 2, wherein, the second groove is located between the first groove and the third groove.

4. The disabling device according to claim 1, wherein, the knob handle is provided with a fixing post extending downward from the bottom of the knob handle, and the connecting rod is sleeved on an outer side of the fixing post and fixed to the fixing post through a fastener.

5. The disabling device according to claim 4, wherein, the fixing post is hexagonal-shaped, the connecting rod is provided with an opening hole to accommodate the fixing post, the fixing post is provided with a fixing hole, the connecting rod is provided with a perforation hole communicated with the fixing hole, and the fastener is configured to pass through the perforation hole and extend into the fixing hole to be locked and fixed to the fixing hole.

6. The disabling device according to claim 1, wherein, a magnet is arranged inside the toggling part, the magnet is configured to be matched with a switch, when the toggling part is in the start state, the magnet approaches the switch to enable the switch to be electrically conductive, and when the toggling part is in the close state or the release state, the magnet moves away from the switch to enable the switch to be disconnected.

7. The disabling device according to claim 6, wherein, the switch is a reed switch.

8. The disabling device according to claim 1, wherein, the connecting component is post-shaped, and comprises a first connecting part and a second connecting part connected with the first connecting part, the first connecting part is provided with a supporting part protruding toward the penetrating groove to abut against the connecting rod in the penetrating groove, the second connecting part is arranged away from the supporting part, a diameter of the second connecting part is less than a diameter of the first connecting part, and the elastic component is sleeved on an outer side of the second connecting part and abut against the first connecting part.

9. The disabling device according to claim 8, wherein, the connecting component further comprises a third connecting part extending outward from an outer edge of the first connecting part, and an accommodating groove to accommodate the third connecting part is correspondingly arranged on the fixing base.

10. The disabling device according to claim 1, wherein, the elastic component is a spring, and configured to abut against the connecting component and the connecting rod to fix the protruding part in the first groove, the second groove or the third groove.

11. A mower, comprising a main body and a disabling device arranged on the main body, wherein, the disabling device comprises:
a fixing assembly, comprising:
a fixing base, the fixing base provided with a penetrating groove, a first groove, a second groove and a third groove, and the first groove, the second groove and the third groove all communicated with the penetrating groove;
an elastic component;
a connecting component, the connecting component located between the fixing base and the elastic component; and
a knob assembly, comprising:
a knob handle and a connecting rod, the knob handle provided with a protruding toggling part, the connecting rod extending downward from a bottom of the knob handle, and a protruding part arranged on an outer side wall of the connecting rod;
wherein, the connecting rod is configured to pass through the penetrating groove and push the connecting component to compress the elastic component downward and rotate, when the protruding part is respectively positioned in the first groove, the second groove and the third groove, and the knob assembly is respectively in a start state, a close state and a release state.

12. The mower according to claim 11, wherein, a switch is arranged inside the main body, a magnet is arranged inside the toggling part, when the toggling part is in the start state, the magnet approaches the switch to enable the switch to be electrically conductive, and when the toggling part is in the close state or the release state, the magnet moves away from the switch to enable the switch to be disconnected.

13. The mower according to claim 11, wherein, the fixing base is fixedly connected with the main body, the first groove and the second groove are both concave grooves, the third groove is a through groove that penetrates the fixing base, and when the protruding part is accommodated in the third groove, the knob assembly is detachable from the fixing assembly.

14. The mower according to claim 11, wherein, the knob handle is provided with a fixing post extending downward from the bottom of the knob handle, and the connecting rod is sleeved on an outer side of the fixing post and fixed to the fixing post through a fastener.

15. The mower according to claim 14, wherein, the fixing post is hexagonal, the connecting rod is provided with an opening hole to accommodate the fixing post, the fixing post is provided with a fixing hole, the connecting rod is provided with a perforation hole communicated with the fixing hole, and the fastener passes through the perforation hole and extends into the fixing hole to be locked and fixed to the fixing hole.

16. The mower according to claim 11, wherein, the connecting component is post-shaped, and comprises a first connecting part and a second connecting part connected with the first connecting part, the first connecting part is provided with a supporting part protruding toward the penetrating groove to abut against the connecting rod in the penetrating groove, the second connecting part is arranged away from the supporting part, a diameter of the second connecting part is less than a diameter of the first connecting part, and the elastic component is sleeved on an outer side of the second connecting part and abut against the first connecting part.

17. The mower according to claim 16, wherein, the connecting component further comprises a third connecting part extending outward from an outer edge of the first connecting part, and an accommodating groove to accommodate the third connecting part is correspondingly arranged on the fixing base.

18. The mower according to claim 11, wherein, the elastic component is a spring, and configured to abut against the connecting component and the connecting rod to fix the protruding part in the first groove, the second groove or the third groove.

19. The mower according to claim 11, wherein, the main body comprises a chassis, a bottom of the chassis is provided with a through hole, and the mower further comprises:
a cutting system, the cutting system comprising a cutting device and a cutting motor, an output shaft of the cutting motor extending from the through hole to below the chassis and connected with the cutting device, and the cutting motor slidably installed on the chassis; and
an adjusting mechanism, the adjusting mechanism fixedly installed on the chassis, and connected with the cutting system to drive the cutting system to move along a transverse direction of the mower.

20. The mower according to claim 19, further comprising:
a motor cylinder, the cutting motor located in the motor cylinder, and the motor cylinder slidably installed on the chassis;
a threaded rod, the threaded rod connected with the motor cylinder; and
a height adjustment assembly, the height adjustment assembly comprising:
a height adjustment motor, the height adjustment motor configured to drive the threaded rod to enable the motor cylinder to move up and down relative to the chassis;
wherein, a threaded structure is arranged in a middle position of the threaded rod, and two sides of the threaded structure are in smooth rod structures.
